# EUROPEAN PATENT APPLICATION

(11) **EP 4 793 739 A1**
(43) Date of publication of application: **19.08.2026**
(21) Application number: 24922425.4
(22) Date of filing: 04.12.2024
(51) Int. Cl.: G06F 3/01, G06F 1/26, G06F 3/041

(54) **ELECTRONIC DEVICE COMPRISING MOTOR FOR PROVIDING HAPTIC FEEDBACK AND CHANGING SIZE OF DISPLAY AREA OF FLEXIBLE DISPLAY**

(30) Priority: 30.01.2024 KR 20240014445; 12.03.2024 KR 20240034560
(71) Applicant: Samsung Electronics Co., Ltd., Suwon-si, Gyeonggi-do 16677 (KR)
(72) Inventor: KIM, Namwoo, Suwon-si Gyeonggi-do 16677 (KR); AHN, Jaeuk, Suwon-si Gyeonggi-do 16677 (KR); KANG, Jeongho, Suwon-si Gyeonggi-do 16677 (KR); KIM, Minho, Suwon-si Gyeonggi-do 16677 (KR); KIM, Byoungjun, Suwon-si Gyeonggi-do 16677 (KR); KIM, Sunglak, Suwon-si Gyeonggi-do 16677 (KR); JANG, Gyudae, Suwon-si Gyeonggi-do 16677 (KR); CHOI, Junyoung, Suwon-si Gyeonggi-do 16677 (KR); YOON, Byounguk, Suwon-si Gyeonggi-do 16677 (KR)
(74) Representative: Gulde & Partner
(86) International application number: PCT/KR2024/019699
(87) International publication number: WO 2025/164916

(57) **Abstract**

According to an embodiment, an electronic device may comprise: a housing including a first housing part and a second housing part movably coupled to the first housing part; a motor assembly disposed in the housing; and a gear assembly interlocked with the motor assembly. The motor assembly may comprise: a first shaft; a second shaft separated from the first shaft; a rotation member configured to be fastened to at least one of the first shaft and the second shaft; and a vibrator coupled to one side of the second shaft. The electronic device may be configured to control the rotation member to be fastened to the first shaft such that the second housing part is movable with respect to the first housing part through the rotation member, and control the rotation member to be fastened to the second shaft such that the vibrator provides vibration through the rotation member.

## Description

### [Technical Field]

The present disclosure relates to an electronic device including a motor for providing haptic feedback and changing a size of a display region of a flexible display.

### [Background Art]

There is an increasing need for an electronic device in which a size of a display for displaying content may be changed such that a user may be provided with various contents through the electronic device. For example, the electronic device may include a flexible display in which a size of the display exposed to an outside of the electronic device may be changed. The electronic device may include a motor driven to change a size of the display. In order to provide various user experiences to the user, a function for providing haptic feedback to the user may be required of the motor in addition to a function for changing a size of the display.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device is disclosed. The electronic device according to an embodiment may include a housing including a first housing part and a second housing part movably coupled with the first housing part. The electronic device may include a motor assembly, disposed in the housing, including a first shaft, a second shaft separated from the first shaft, a rotating member configured to be fastened to at least one of the first shaft and the second shaft, and a vibrator coupled to a side of the second shaft. The electronic device may include a gear assembly linked with the first shaft to move the second housing part with respect to the first housing part according to driving of the motor assembly. The electronic device may include at least one processor, and memory, including one or more storage mediums, storing instructions. The instructions, when executed by the at least one processor individually or collectively, may cause the electronic device to control the rotating member to be fastened to the first shaft such that the second housing part is movable with respect to the first housing part through the rotating member. The instructions, when executed by the at least one processor individually or collectively, may cause the electronic device to control the rotating member to be fastened to the second shaft such that the vibrator provides vibration through the rotating member.

An electronic device is disclosed. The electronic device according to an embodiment may include a housing including a first housing part and a second housing part movably coupled with the first housing part. The electronic device may include a motor assembly disposed in the housing, and a gear assembly, linked with the motor assembly to move the second housing part with respect to the first housing part according to driving of the motor assembly, including a reducer. The motor assembly may include a first shaft including a first end coupled with the reducer and a second end opposite to the first end, and a second shaft separated from the first shaft. The motor assembly may include a rotating member including a magnet including a through hole accommodating the second shaft to rotate the second shaft based on power supplied to the motor assembly, and a fastening member, attached to the magnet, including a fastening hole configured to insert the second end of the first shaft. The motor assembly may include a vibrator, eccentric with respect to the second shaft, coupled to the second shaft to provide a haptic feedback based on rotation of the second shaft. The rotating member may provide, by moving with respect to the first shaft, an unfastened state in which the second end of the first shaft is separated from the fastening hole such that the second shaft is rotatable with respect to the first shaft, for providing the haptic feedback through the vibrator. The rotating member may provide a fastened state in which the second end of the first shaft is inserted into the fastening hole such that the first shaft is rotatable with respect to the second shaft, for moving the second housing with respect to the first housing.

### [Description of the Drawings]

FIG. 1 is a block diagram of an electronic device in a network environment according to various embodiments.
FIG. 2A is a plan view of an exemplary electronic device in a first state.
FIG. 2B is a bottom view of an exemplary electronic device in a first state.
FIG. 2C is a plan view of an exemplary electronic device in a second state.
FIG. 2D is a bottom view of an exemplary electronic device in a second state.
FIGS. 3A and 3B are exploded perspective views of an exemplary electronic device.
FIG. 4A is a cross-sectional view of an exemplary electronic device in a first state.
FIG. 4B is a cross-sectional view of an exemplary electronic device in a second state.
FIG. 5A illustrates a portion of an exemplary electronic device.
FIG. 5B is a perspective view of a driving unit of an exemplary electronic device.
FIG. 5C is an exploded perspective view of a driving unit of an exemplary electronic device.
FIG. 6A is a cross-sectional view of a driving unit of an exemplary electronic device in an unfastened state, which is taken along line A-A' of FIG. 5B.
FIG. 6B is a cross-sectional view of a driving unit of an exemplary electronic device in a fastened state, which is taken along line A-A' of FIG. 5B.
FIG. 7A illustrates a driving unit of an exemplary electronic device.
FIGS. 7B, 7C, and 7D are partial cross-sectional views of a driving unit of an exemplary electronic device, which are taken along line B-B' and line C-C' of FIG. 7A.
FIG. 8A is a partial exploded view of a motor assembly of an exemplary electronic device.
FIG. 8B illustrates a portion of a motor assembly of an exemplary electronic device in a fastened state.
FIG. 8C is a partial cross-sectional view of a motor assembly of an exemplary electronic device, which is taken along line D-D' of FIG. 8B.
FIG. 8D is a partial cross-sectional view of a motor assembly of an exemplary electronic device, which is taken along line E-E' of FIG. 8B.
FIG. 8E is a partial cross-sectional view of a motor assembly of an exemplary electronic device, which is taken along line F-F' of FIG. 8B.
FIG. 8F is a partial cross-sectional view of a motor assembly of an exemplary electronic device, which is taken along line G-G' of FIG. 8B.
FIG. 9A illustrates a portion of an exemplary electronic device in a first state.
FIG. 9B illustrates a portion of an exemplary electronic device in a second state.
FIG. 10 is a block diagram of an exemplary electronic device for driving a motor assembly.
FIGS. 11A and 11B are flowcharts of an exemplary electronic device for driving a motor assembly.
FIG. 12 is a flowchart of an exemplary electronic device for driving a motor assembly.

### [Mode for Invention]

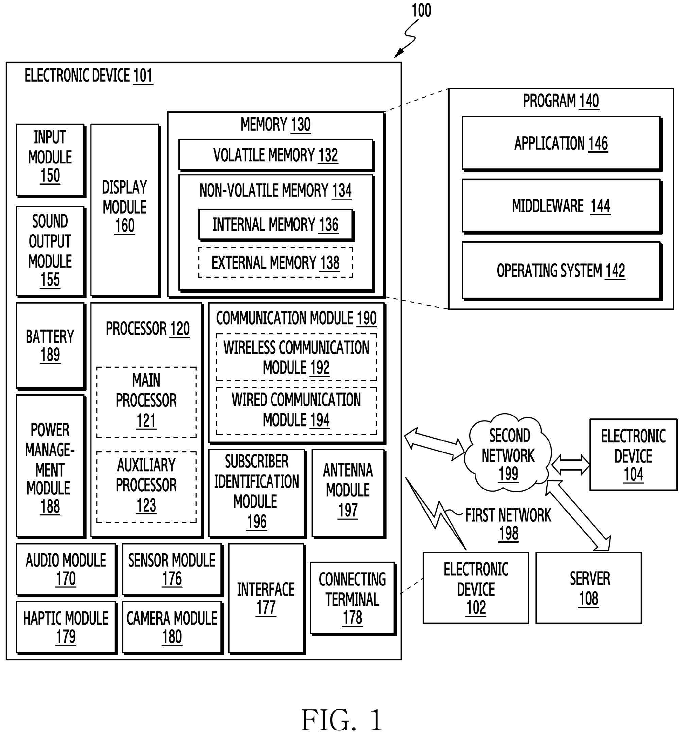

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

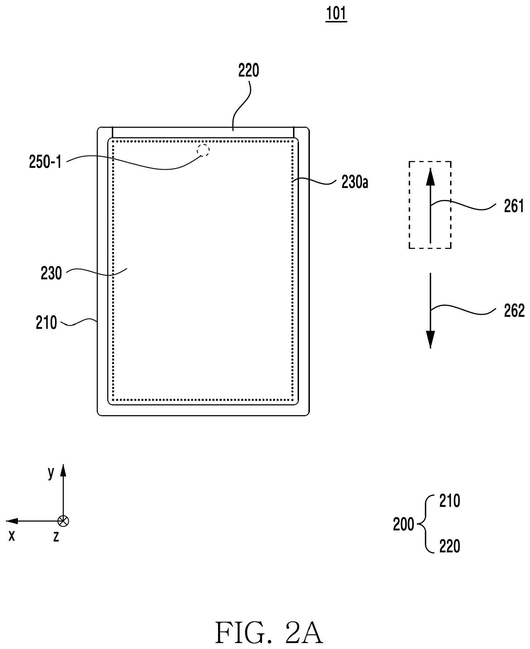

FIG. 2A is a plan view of an exemplary electronic device 101 in a first state.

Referring to FIG. 2A, the electronic device 101 may include a housing 200 including a first housing 210, and a second housing 220 movable with respect to the first housing 210 in a first direction 261 that is parallel to a y-axis, or in a second direction 262 that is parallel to the y-axis and opposite to the first direction 261, and a display 230 (e.g., the display).

For example, the electronic device 101 may be in the first state. For example, in the first state, the second housing 220 may be movable with respect to the first housing 210 in the first direction 261 among the first direction 261 and the second direction 262. For example, in the first state, the second housing 220 may not be movable with respect to the first housing 210 in the second direction 262 opposite to the first direction 261.

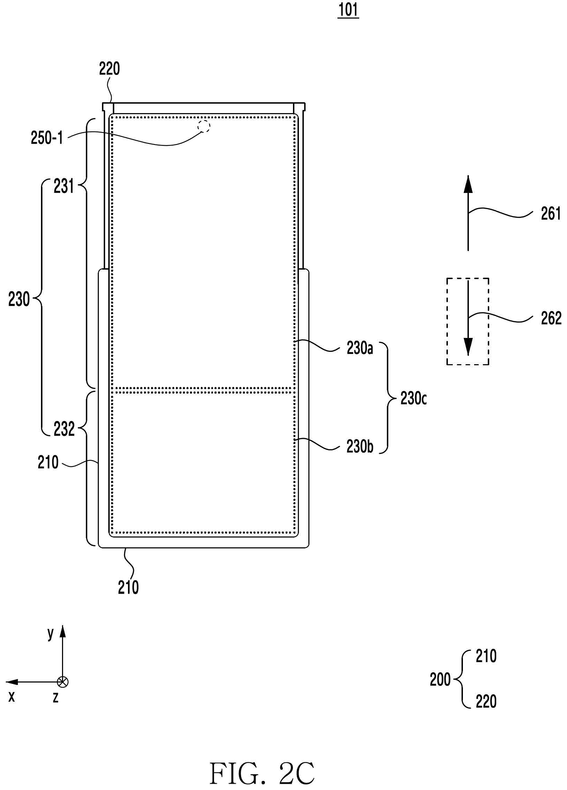

For example, in the first state, the display 230 may provide the display region having the smallest size. For example, in the first state, the display region may correspond to a region 230a. For example, although not illustrated in FIG. 2A, in the first state, a region (e.g., a region 230b of FIG. 2C) of the display 230 different from the region 230a, which is the display region, may be positioned in the first housing 210. For example, in the first state, the region may be covered by the first housing 210. For example, in the first state, the region may be rolled into the first housing 210. For example, in the first state, the region 230a may include a flat portion, unlike the region that includes a curved portion (or a bent portion). However, it is not limited thereto. For example, in the first state, the region 230a may also include a curved portion extending from the flat portion and positioned in an edge portion.

For example, the first state may be referred to as a slide-in state or a closed state in that at least a portion of the second housing 220 is positioned in the first housing 210. For example, the first state may be referred to as a reduced state in terms of providing the display region having the smallest size. However, it is not limited thereto.

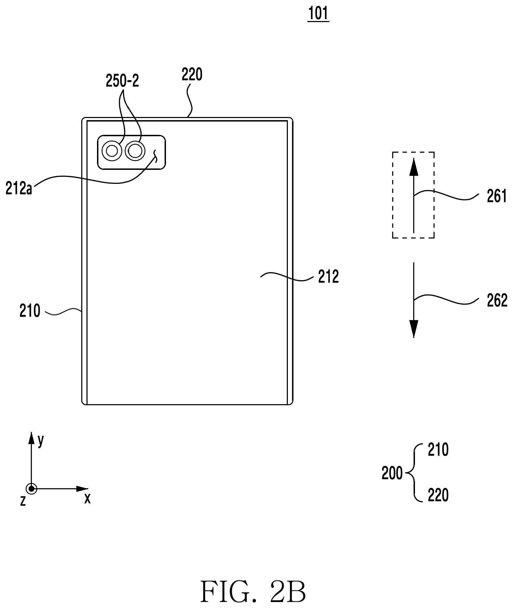

For example, the first housing 210 may include a first image sensor 250-1 in a camera module 180 that is visually exposed through a portion of the region 230a and faces a third direction 263 parallel to a z-axis. For example, the camera module 180 may also be disposed to perform its function without being visually exposed through a portion of the region 230a in an internal space of an electronic device. For example, although not illustrated in FIG. 2A, the second housing 220 may include one or more second image sensors in the camera module 180 that are exposed through a portion of the second housing 220 and face a fourth direction 264 parallel to the z-axis and opposite to the third direction 263. For example, the one or more second image sensors may be exemplified through description of FIG. 2B.

FIG. 2B is a bottom view of an exemplary electronic device in a first state.

Referring to FIG. 2B, in the first state, one or more second image sensors 250-2 disposed in the second housing 220 may be positioned in a structure disposed in the first housing 210 for the one or more second image sensors 250-2. For example, in the first state, light from an outside of the electronic device 101 may be received by the one or more second image sensors 250-2 through the structure. For example, since the one or more second image sensors 250-2 are positioned in the structure in the first state, the one or more second image sensors 250-2 may be exposed through the structure in the first state. For example, the structure may be variously implemented. For example, the structure may be an opening or a notch. For example, the structure may be an opening 212a in a plate 212 of the first housing 210 covering at least a portion of the second housing 220. However, it is not limited thereto. For example, in the first state, the one or more second image sensors 250-2 included in the second housing 220 may be covered by the plate 212 of the first housing 210.

Referring back to FIG. 2A, the first state may be changed to the second state.

For example, the first state (or the second state) may be changed to the second state (or the first state) through one or more intermediate states between the first state and the second state.

For example, the first state (or the second state) may be changed to the second state (or the first state) based on a defined user input. For example, the first state (or the second state) may be changed to the second state (or the first state) in response to a user input to a physical button exposed through a portion of the first housing 210 or a portion of the second housing 220. For example, the first state (or the second state) may be changed to the second state (or the first state) in response to a touch input to an executable object displayed in the display region. For example, the first state (or the second state) may be changed to the second state (or the first state) in response to a touch input having a contact point on the display region and a pressing strength of more than a reference strength. For example, the first state (or the second state) may be changed to the second state (or the first state) in response to a voice input received through a microphone of the electronic device 101. For example, the first state (or the second state) may be changed to the second state (or the first state) in response to an external force applied to the first housing 210 and/or the second housing 220 to move the second housing 220 with respect to the first housing 210. For example, the first state (or the second state) may be changed to the second state (or the first state) in response to a user input identified by an external electronic device (e.g., earbuds or a smart watch) connected to the electronic device 101. However, it is not limited thereto.

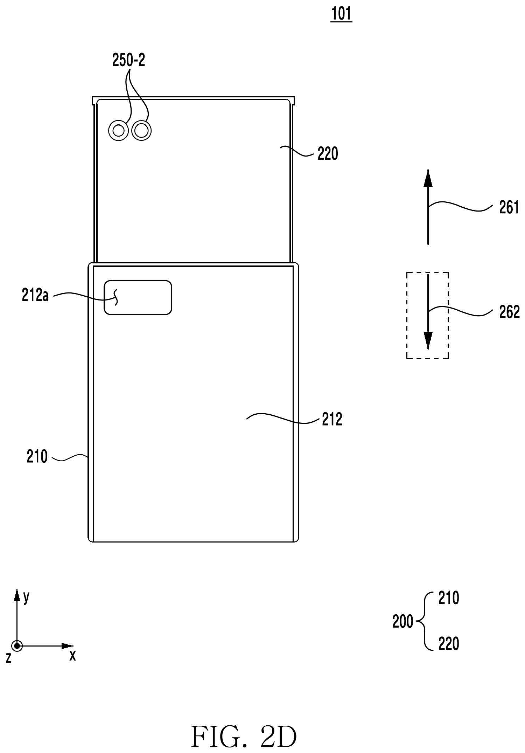

The second state may be exemplified through description of FIGS. 2C and 2D.

FIG. 2C is a plan view of an exemplary electronic device in a second state.

Referring to FIG. 2C, the electronic device 101 may be in the second state. For example, in the second state, the second housing 220 may be movable with respect to the first housing 210 in the second direction 262 among the first direction 261 and the second direction 262. For example, in the second state, the second housing 220 may not be movable with respect to the first housing 210 in the first direction 261 opposite to the second direction 262.

For example, in the second state, the display 230 may provide the display region having the largest size. For example, in the second state, the display region may correspond to a region 230c including the region 230a and the region 230b. For example, the region 230b positioned in the first housing 210 in the first state may be exposed to an outside of the housing 210 in the second state. For example, in the second state, the region 230a may include a flat portion. However, it is not limited thereto. For example, the region 230a may also include a curved portion extending from the flat portion and positioned in an edge portion. For example, unlike the region 230a in the first state, the region 230b in the second state may include a flat portion among the flat portion and a curved portion. However, it is not limited thereto. For example, the region 230b may also include a curved portion extending from the flat portion of the region 230b and positioned in an edge portion.

For example, the display 230 may include a first display region 231 disposed on the second housing 220, and a second display region 232 that extends from the first display region 231, and at least partially slides into the first housing 210 or visually exposed to the outside of the electronic device 101 according to movement of the second housing 220 with respect to the first housing 210. For example, the first display region 231 may be a portion of the display 230 that is visually exposed to the outside of the electronic device 101. The first display region 231 may be a portion that is not deformed according to the movement of the second housing 220 with respect to the first housing 210. For example, the second display region 232 may be a portion of the display 230 that is deformed along the second housing 220 moving with respect to the first housing 210. The display 230 may be referred to as a flexible display, in terms of including the deformable second display region 232, but is not limited thereto.

For example, the second state may be referred to as a slide-out state or an open state in that at least a portion of the second housing 220 is positioned outside the first housing 210. For example, the second state may be referred to as an extended state in terms of providing the display region having the largest size. However, it is not limited thereto.

For example, when a state of the electronic device 101 is changed from the first state to the second state, the first image sensor 250-1 facing the third direction 263 may move together with the region 230a according to movement of the second housing 220 in the second direction 262. For example, although not illustrated in FIG. 2C, when a state of the electronic device 101 is changed from the first state to the second state, the one or more second image sensors 250-2 facing the fourth direction 264 may move according to movement of the second housing 220 in the second direction 262. For example, a relative positional relationship between the one or more second image sensors 250-2 and the structure in the first housing 210 exemplified through the description of FIG. 2B may be changed according to the movement of the one or more second image sensors 250-2. For example, the change in the relative positional relationship may be exemplified through FIG. 2D.

FIG. 2D is a bottom view of an exemplary electronic device 101 in a second state.

Referring to FIG. 2D, in the second state, the one or more second image sensors 250-2 may be positioned outside the structure (e.g., an opening or a notch) in the first housing 210 exemplified through the description of FIG. 2B. For example, in the second state, the one or more second image sensors 250-2 may be positioned outside the opening 212a in the plate 212. For example, the one or more second image sensors 250-2 may be exposed through the opening 212a in the first state. The one or more second image sensors 250-2 may be exposed by being positioned outside the opening 212a in the second state. For example, since the one or more second image sensors 250-2 are positioned outside the structure in the second state, the relative positional relationship between the one or more second image sensors 250-2 in the second state and the structure in the first housing 210 exemplified through the description of FIG. 2B may be different from the relative positional relationship in the first state.

For example, in a case that the electronic device 101 does not include the structure such as the opening 212a, the one or more second image sensors 250-2 in the first state may not be exposed to an outside of the housing, but in the second state, the one or more second image sensors 250-2 may be exposed to the outside of the housing.

Although not illustrated in FIGS. 2A, 2B, 2C, and 2D, the electronic device 101 may be in an intermediate state between the first state and the second state. For example, a size of the display region in the intermediate state may be larger than the size of the display region in the first state and smaller than the size of the display region in the second state. For example, the display region in the intermediate state may correspond to a region including the region 230a and a portion of the region 230b. For example, in the intermediate state, a portion of the region 230b may be exposed, and another portion (or a remaining portion) of the region 230b may be covered by the first housing 210 or rolled into the first housing 210. However, it is not limited thereto.

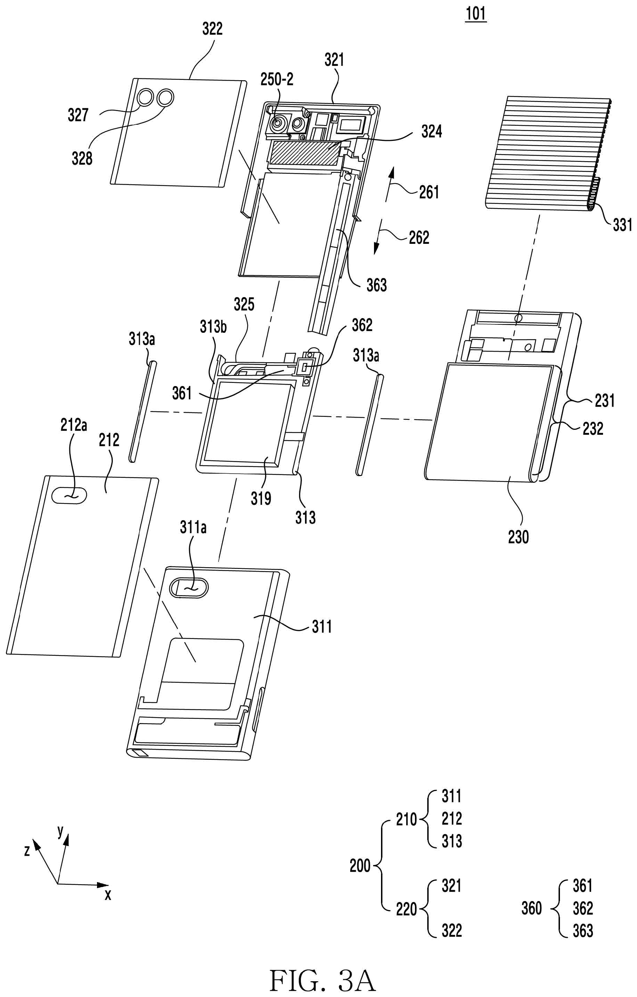

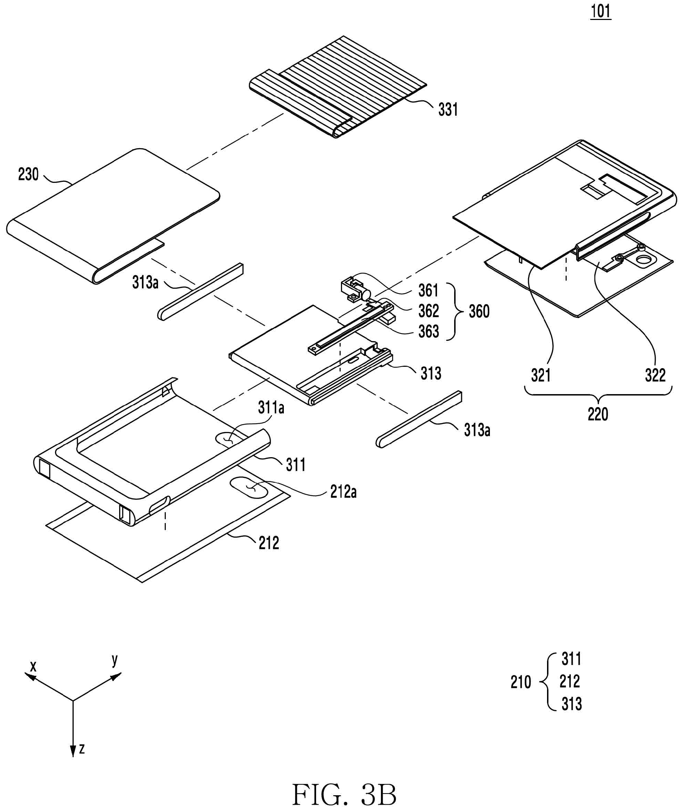

Referring back to FIG. 1, the electronic device 101 may include structures for moving the second housing (e.g., the second housing 220 of FIG. 2A) of the electronic device 101 with respect to the first housing (e.g., the first housing 210 of FIG. 2A) of the electronic device 101. For example, the structures may be exemplified through descriptions of FIGS. 3A and 3B.

FIGS. 3A and 3B are exploded perspective views of an exemplary electronic device.

Referring to FIGS. 3A and 3B, an electronic device 101 may include a housing 200 including a first housing 210 and a second housing 220, a display 230, and a driving unit 360.

For example, the first housing 210 may include a first housing cover 311, a plate 212, and a frame cover 313.

For example, the first housing cover 311 may at least partially form a side portion of an outer surface of the electronic device 101. For example, the first housing cover 311 may at least partially form a rear portion of the outer surface. For example, the first housing cover 311 may include an opening 311a for one or more second image sensors 250-2. For example, the first housing cover 311 may include a surface supporting the plate 212. For example, the first housing cover 311 may be coupled with the plate 212. For example, the first housing cover 311 may include the frame cover 313. For example, the first housing cover 311 may be coupled with the frame cover 313.

For example, the plate 212 may at least partially form a rear portion of the outer surface. For example, the plate 212 may include an opening 212a for the one or more second image sensors 250-2. For example, the plate 212 may be disposed on the surface of the first housing cover 311. For example, the opening 212a may be aligned with the opening 311a.

For example, the frame cover 313 may be at least partially covered by the first housing cover 311.

For example, the frame cover 313 may be at least partially covered by the display 230. For example, the frame cover 313 is at least partially covered by the display 230, but a position of the frame cover 313 may be maintained independently of movement of the display 230. For example, the frame cover 313 may be arranged in association with at least a portion of components of the display 230. For example, the frame cover 313 may include rails 313a that provide (or guide) a path for movement of at least one component of the display 230.

For example, the frame cover 313 may be coupled with at least one component of the electronic device 101. For example, the frame cover 313 may support a rechargeable battery 189. For example, the battery 189 may be supported through a recess or a hole in a surface 313b of the frame cover 313. For example, the frame cover 313 may be coupled with an end of a flexible printed circuit board (FPCB) 325 on a surface on the frame cover 313. For example, although not explicitly illustrated in FIGS. 3A and 3B, another end of the FPCB 325 may be connected to a PCB 324 through at least one connector. For example, the PCB 324 may be electrically connected, through the FPCB 325, with another PCB (not illustrated in FIGS. 3A and 3B) that supplies power to a motor assembly 361.

For example, the frame cover 313 may be coupled with at least one structure of the electronic device 101 for a plurality of states including the first state and the second state. For example, the frame cover 313 may fix the motor assembly 361 of the driving unit 360.

For example, the second housing 220 may include a front cover 321 and a slide cover 322.

For example, the front cover 321 may be at least partially covered by the display 230. For example, unlike the frame cover 313, the front cover 321 may be coupled with at least a portion of a first display region 231 of the display 230 covering the front cover 321 such that the display 230 moves along with the second housing 220 moving with respect to the first housing 210.

For example, the front cover 321 may be coupled with at least one component of the electronic device 101. For example, the front cover 321 may be coupled with the printed circuit board (PCB) 324 including components of the electronic device 101. For example, the PCB 324 may include a processor 120 (not illustrated in FIGS. 3A and 3B). For example, the front cover 321 may include the one or more second image sensors 250-2.

For example, the front cover 321 may be coupled with at least one structure of the electronic device 101 for a plurality of states including the first state and the second state. For example, the front cover 321 may fix a rack gear 363 of the driving unit 360.

For example, the front cover 321 may be coupled to the slide cover 322.

For example, the slide cover 322 may be coupled with the front cover 321 to protect at least one component of the electronic device 101 coupled in the front cover 321 and/or at least one structure of the electronic device 101 coupled in the front cover 321. For example, the slide cover 322 may include a structure for the at least one component. For example, the slide cover 322 may include one or more openings 326 for the one or more second image sensors 250-2. For example, the one or more openings 326 may be aligned with the one or more second image sensors 250-2 disposed on the front cover 321. For example, a size of each of the one or more openings 326 may correspond to a size of each of the one or more second image sensors 250-2.

For example, the display 230 may include a support member 331. For example, the support member 331 may include a plurality of bars. For example, the plurality of bars may be coupled with each other.

For example, the driving unit 360 may include the motor assembly 361, a pinion gear 362, and the rack gear 363.

For example, the motor assembly 361 may operate based on power from the battery 189. For example, the power may be provided to the motor assembly 361 in response to the defined user input.

For example, the pinion gear 362 may be coupled with the motor assembly 361 through a shaft. For example, the pinion gear 362 may be rotated based on the operation of the motor assembly 361 transmitted through the shaft.

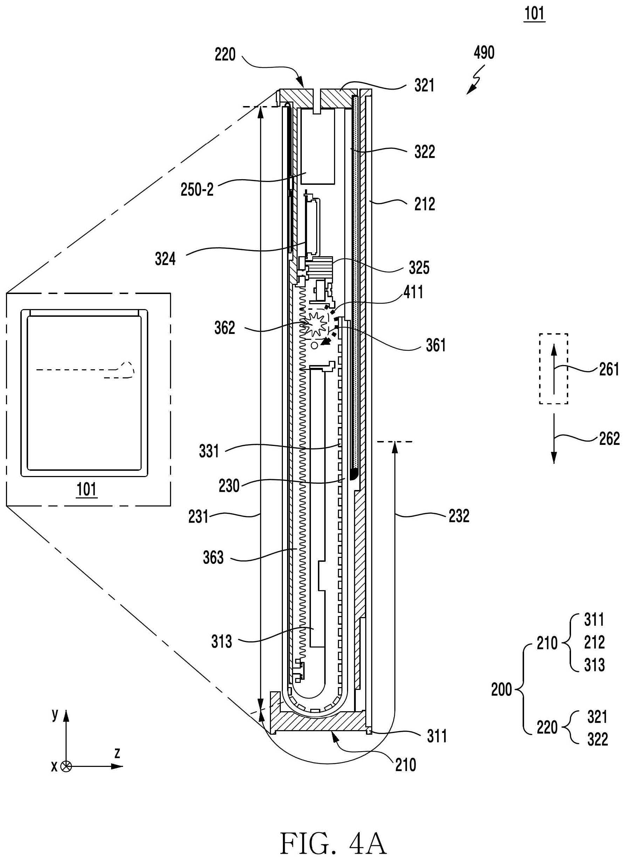

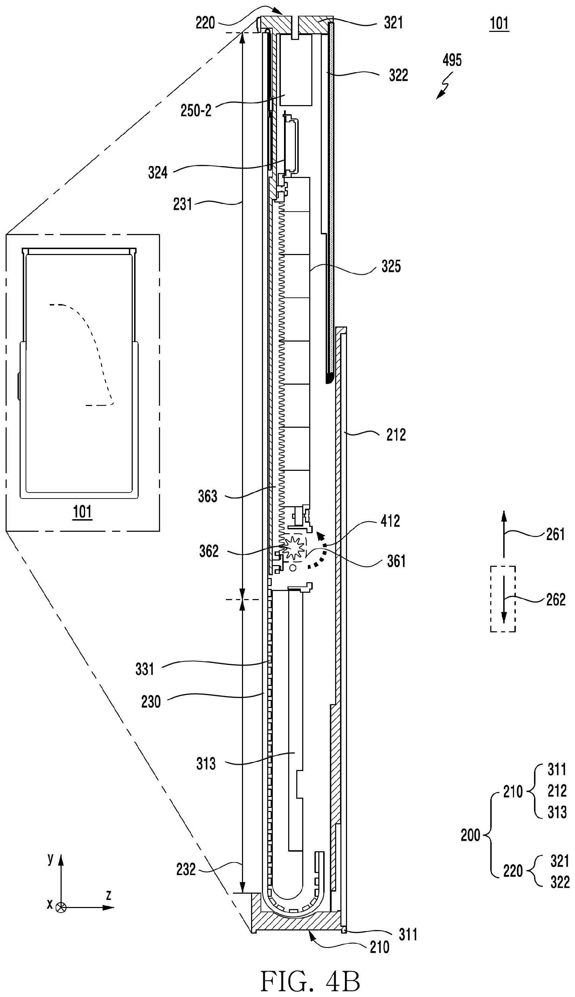

For example, the rack gear 363 may be arranged in association with the pinion gear 362. For example, teeth of the rack gear 363 may be engaged with teeth of the pinion gear 362. For example, the rack gear 363 may move in a first direction 261 or a second direction 262 according to the rotation of the pinion gear 362. For example, the second housing 220 may move in the first direction 261 and the second direction 262 by the rack gear 363 that moves according to the rotation of the pinion gear 362 due to the operation of the motor assembly 361. For example, the first state of the electronic device 101 may be changed to a state (e.g., the one or more intermediate states or the second state) different from the first state through the movement of the second housing 220 in the second direction 262. For example, the second state of the electronic device 101 may be changed to a state (e.g., the one or more intermediate states or the first state) different from the second state through the movement of the second housing 220 in the first direction 261. For example, the change of the first state to the second state by the driving unit 360 and the change of the second state to the first state by the driving unit 360 may be exemplified through FIGS. 4A and 4B.

FIG. 4A is a cross-sectional view of an exemplary electronic device in a first state. FIG. 4B is a cross-sectional view of an exemplary electronic device in a second state.

Referring to FIGS. 4A and 4B, a motor assembly 361 may be operated based at least in part on the defined user input received in a state 490, which is the first state. For example, a pinion gear 362 may be rotated in a first rotation direction 411 based at least in part on the operation of the motor assembly 361. For example, a rack gear 363 may move in a first direction 261 based at least in part on the rotation of the pinion gear 362 in the first rotation direction 411. For example, since a front cover 321 in a second housing 220 fixes the rack gear 363, the second housing 220 may move in the first direction 261 based at least in part on the movement of the rack gear 363 in the first direction 261. For example, since the front cover 321 in the second housing 220 is coupled with at least a portion of a first display region 231 of a display 230 and fixes the rack gear 363, the display 230 may move based at least in part on the movement of the rack gear 363 in the first direction 261. For example, the display 230 may move along rails 313a. For example, a shape of at least a portion of the plurality of bars of a support member 331 of the display 230 may be changed when the state 490 is changed to a state 495, which is the second state.

For example, a second display region 232 of the display 230 may move according to the movement of the display 230. For example, when the state 490 is changed to the state 495 according to the defined user input, the second display region 232 may move through a space between a first housing cover 311 and a frame cover 313. For example, the second display region 232 in the state 495 may be exposed, unlike the second display region 232 that has slid into the space in the state 490.

For example, since the front cover 321 in the second housing 220 is coupled with a PCB 324 connected with the another end of an FPCB 325 and fixes the rack gear 363, a shape of the FPCB 325 may be changed when the state 490 is changed to the state 495.

The motor assembly 361 may be operated based at least in part on the defined user input received in the state 495. For example, the pinion gear 362 may be rotated in a second rotation direction 412 based at least in part on the operation of the motor assembly 361. For example, the rack gear 363 may move in a second direction 262 based at least in part on the rotation of the pinion gear 362 in the second rotation direction 412. For example, since the front cover 321 in the second housing 220 fixes the rack gear 363, the second housing 220 may move in the second direction 262 based at least in part on the movement of the rack gear 363 in the second direction 262. For example, since the front cover 321 in the second housing 220 is coupled with at least a portion of the first display region 231 of the display 230 and fixes the rack gear 363, the display 230 may move based at least in part on the movement of the rack gear 363 in the second direction 262. For example, the display 230 may move along the rails 313a. For example, a shape of at least a portion of the plurality of bars of the support member 331 of the display 230 may be changed when the state 495 is changed to the state 490.

For example, the second display region 232 of the display 230 may move according to the movement of the display 230. For example, when the state 495 is changed to the state 490 according to the defined user input, the second display region 232 may move through a space between the first housing cover 311 and the frame cover 313. For example, unlike the second display region 232 exposed in the state 495, the second display region 232 in the state 490 may slide into the space.

For example, since the front cover 321 in the second housing 220 is coupled with the PCB 324 connected with the another end of the FPCB 325 and fixes the rack gear 363, a shape of the FPCB 325 may be changed when the state 495 is changed to the state 490.

FIGS. 2A to 4B illustrate the electronic device 101 in which a height of the display region is changed and a width of the display region is maintained when the first state (or the second state) is changed to the second state (or the first state) in a portrait mode, but it is for convenience of description. For example, the electronic device 101 may be implemented such that, when the first state (or the second state) is changed to the second state (or the first state) in the portrait mode, a height of the display region is maintained and a width of the display region is changed.

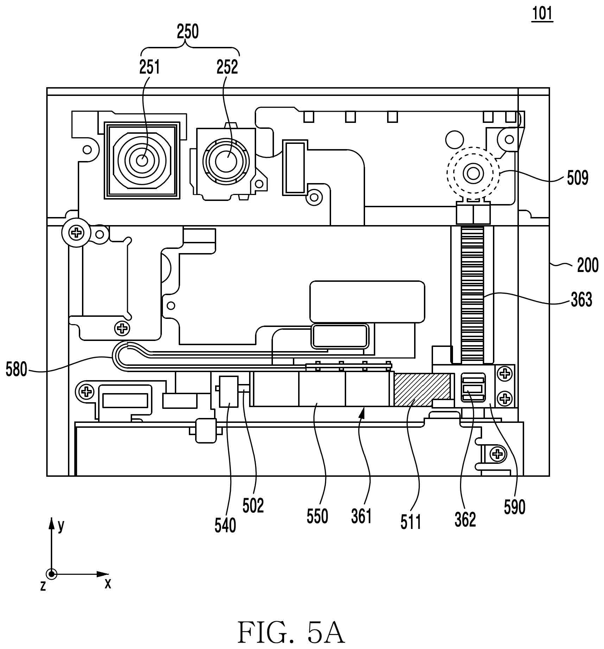

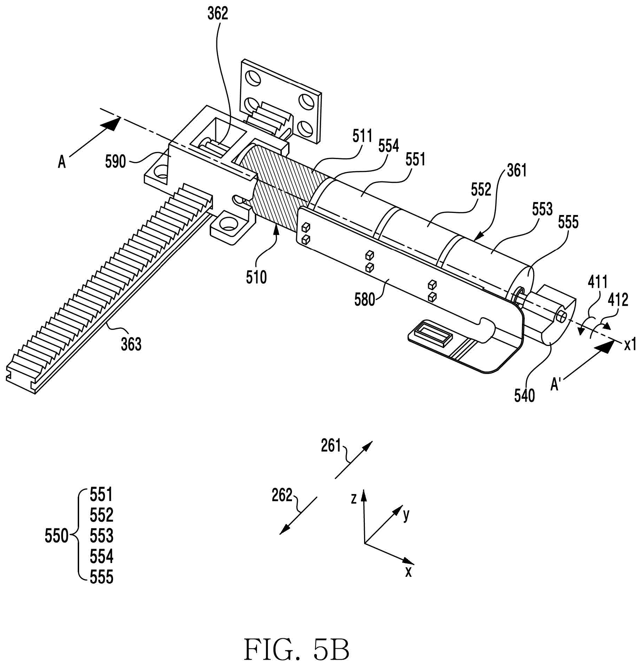

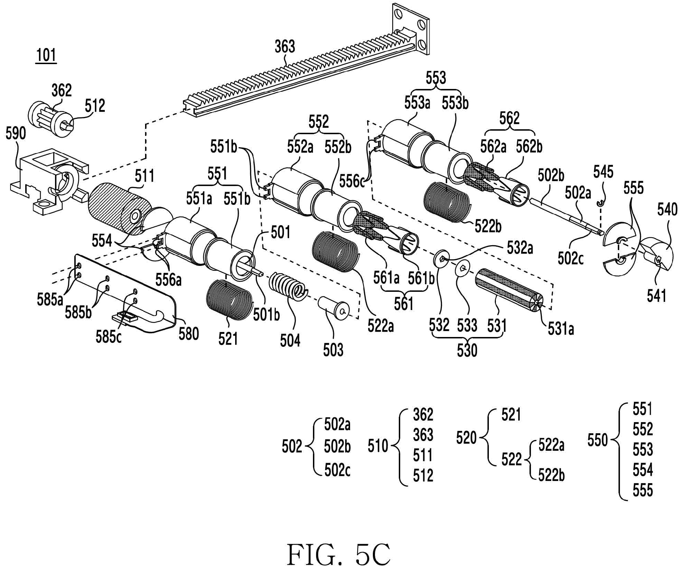

FIG. 5A illustrates a portion of an exemplary electronic device. FIG. 5B is a perspective view of a driving unit of an exemplary electronic device. FIG. 5C is an exploded perspective view of a driving unit of an exemplary electronic device.

Referring to FIGS. 5A, 5B, and 5C, an electronic device 101 may include a housing 200 that includes a first housing (e.g., the first housing 210 of FIG. 2A) and a second housing (e.g., the second housing 220 of FIG. 2A) movably coupled with the first housing 210. The electronic device 101 may include a driving unit (e.g., the driving unit 360 of FIG. 3B), which includes a motor assembly 361 disposed in the housing 200 and a gear assembly 510. The motor assembly 361 may include a first shaft 501, a second shaft 502, a plurality of coils 520, a rotating member 530, and a vibrator 540.

According to an embodiment, the electronic device 101 may include a display (e.g., the display 230 of FIG. 2A). The display 230 may include a first display region (e.g., the first display region 231 of FIG. 2C) disposed on the second housing, and a second display region (e.g., the second display region 232 of FIG. 2C) extending from the first display region 231, at least partially slide into the first housing 210 or visually exposed to an outside of the electronic device 101 according to movement of the second housing 220.

For example, the first display region 231 may be exposed to the outside of the electronic device 101. The first display region 231 may be a substantially planar region. For example, the first display region 231 may be a region of the display 230 that is not deformed. For example, the first display region 231 may be a region of the display 230 in which a size visually exposed to the outside is fixed.

For example, the second display region 232 may be connected with the first display region 231. The second display region 232 may be a region of the display 230 that is deformable by the first housing 210 and/or the second housing 220. For example, the second display region 232 may be at least partially bent by at least partially sliding into the first housing 210. The second display region 232 may form a curved surface by at least partially sliding into the first housing 210. For example, the second display region 232 may be configured to change a size of the display 230 visually exposed to the outside of the electronic device 101 by at least partially sliding into the first housing 210 or being exposed to the outside of the electronic device 101. For example, the electronic device 101 may include at least one gear (e.g., a pinion gear 362) that provides a rotation axis x1 for moving the second display region 232. The second display region 232 may be at least partially deformed by being bent with respect to the rotation axis x1 by the at least one gear. The display 230 may provide a user of the electronic device 101 with various user experiences by including the deformable second display region 232.

According to an embodiment, the second housing 220 may be movably coupled with the first housing 210 between a reduction position and an expansion position. In the present document, it should be noted that, when the second housing 220 is mentioned to move with respect to the first housing 210, it indicates a relative movement of the second housing 220 with respect to the first housing 210, and does not limit driving of the housing 200 of the electronic device 101 and/or a disposition relationship between the second housing 220 and the first housing 210. For example, the second housing 220 moving with respect to the first housing 210 may mean the first housing 210 moving with respect to the second housing 220 according to a relative viewpoint. For example, the second housing 220 moving in a first direction 261 with respect to the first housing 210 may be represented as the first housing 210 moving in a second direction 262 opposite to the first direction 261 with respect to the second housing 220. The second housing 220 moving in the second direction 262 opposite to the first direction 261 with respect to the first housing 210 may be represented as the first housing 210 moving in the first direction 261 with respect to the second housing 220. However, the above-mentioned embodiments are examples and are not limited thereto.

A first state of the electronic device 101 may be defined as a state (e.g., the state 490 of FIG. 4A) in which the second display region 232 of the display 230 slides into the first housing 210 and a display region of the display 230 that is visually exposed to the outside of the electronic device 101 has a minimum size. The first state may be referred to as a slide-in state or a closed state. A second state of the electronic device 101 may be defined as a state (the state 495 of FIG. 4B) in which, as the second display region 232 of the display 230 is exposed to the outside of the electronic device 101, a display region (e.g., the region 230c of FIG. 2C) of the display 230 that is visually exposed to the outside of the electronic device 101 has a maximum size. The second state may be referred to as a slide-out state or an open state. For example, the first state may be a state in which the second housing 220 is movable in the first direction 261 with respect to the first housing 210. For example, the second state may be a state in which the second housing 220 is movable in the second direction 262 opposite to the first direction 261 with respect to the first housing 210. The first state may be referred to as a state in which the second housing 220 is in a reduction position with respect to the first housing 210 in a state of providing the minimum sized display region of the display 230 that is exposed to the outside of the electronic device 101. The second state may be referred to as a state in which the second housing 220 is in an expansion position with respect to the first housing 210 in a state of providing the maximum sized display region of the display 230 that is visually exposed to the outside of the electronic device 101.

For example, although not illustrated, a portion of the second display region 232 may be exposed to the outside in an intermediate state between the first state and the second state. A remainder of the second display region 232 may be disposed in the first housing 210. The second display region 232 may be configured to provide a plurality of states to the electronic device 101 by being deformable such that the second display region 232 slides into the first housing 210 or is exposed to the outside of the electronic device 101.

For example, the second housing 220 may be coupled to the first housing 210 so as to be movable along the first direction 261 parallel to a y-axis or the second direction 262 opposite to the first direction 261 with respect to the first housing 210. For example, the second housing 220 may be coupled to the first housing 210 so as to be slidable in the first direction 261 or the second direction 262 opposite to the first direction 261 with respect to the first housing 210. For example, when referring to FIGS. 2A, 2B, 2C, 2D, 4A, and 4B together, the second housing 220 may move from the first state by sliding in the first direction 261 parallel to the y-axis with respect to the first housing 210. As the second housing 220 moves in the first direction 261 with respect to the first housing 210, the second housing 220 may be configured to change the electronic device 101 from the first state to the second state. For example, the second housing 220 may move from the second state by sliding in the second direction 262 parallel to the y-axis and opposite to the first direction 261 with respect to the first housing 210. As the second housing 220 moves in the second direction 262 with respect to the first housing 210, the second housing 220 may be configured to change the electronic device 101 from the second state to the first state.

For example, when referring to FIGS. 2A, 2B, and 4A together, the first display region 231 may be disposed on the second housing 220 and exposed to the outside. In the first state, the second display region 232 may be disposed in the first housing 210. While changing from the first state to the second state, since the second housing 220 moves in the first direction 261 with respect to the first housing 210, the first display region 231 may move in the first direction 261 along the second housing 220. Since the second display region 232 extends from the first display region 231, the second display region 232 may be exposed to the outside by moving along the first display region 231.

For example, when referring to FIGS. 2C, 2D, and 4B together, the second display region 232 may be exposed to the outside in the second state. While changing from the second state to the first state, since the second housing 220 moves in the second direction 262 opposite to the first direction 261 with respect to the first housing 210, the first display region 231 may move in the second direction 262 along the second housing 220. Since the second display region 232 extends from the first display region 231, the second display region 232 may slide into the first housing 210 by moving along the first display region 231.

According to an embodiment, the electronic device 101 may include an actuator 509 (or a vibration motor assembly) for providing a haptic feedback to a user. For example, the electronic device 101 may be configured to provide a haptic feedback by controlling the actuator 509 to vibrate the actuator 509 based on a user input for the haptic feedback. Since the actuator 509 is separated from the motor assembly 361, it may be difficult for the electronic device 101 to secure an additional space for other electronic components in the electronic device 101. For example, the electronic device 101 may include one or more cameras 250. The one or more cameras 250 may include, for example, a first camera 251 and a second camera 252 disposed along a periphery of the second housing 220 inside the housing 200. In order to secure a space for another camera distinguished from the first camera 251 and the second camera 252, the electronic device 101 may be required to provide the user with a haptic feedback while omitting the actuator 509. Hereinafter, a structure of a driving unit (e.g., the driving unit 360 of FIG. 3B) (or the motor assembly 361) for moving the second housing 220 with respect to the first housing 210 and providing the user with a haptic feedback is described.

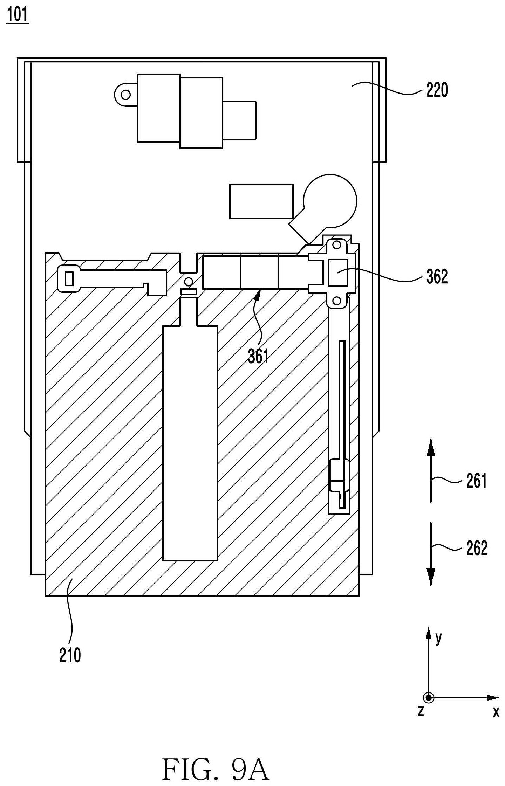

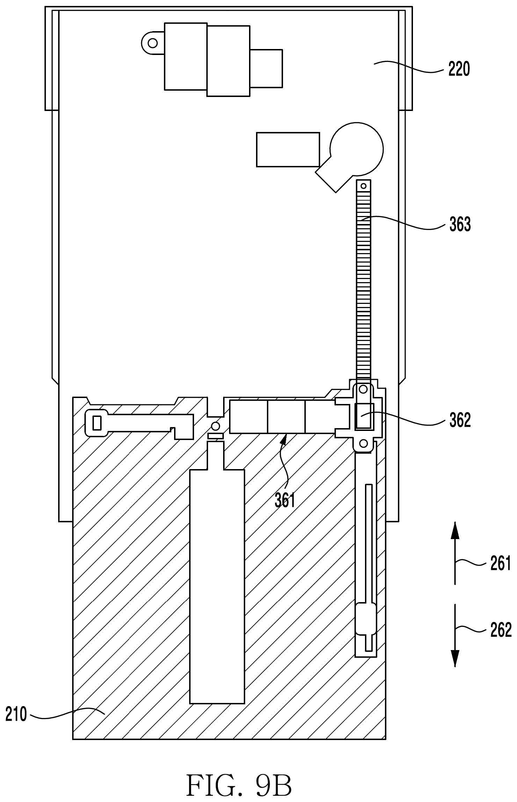

According to an embodiment, the motor assembly 361 may be disposed in the housing 200. For example, the motor assembly 361 may be driven based on power supplied to the motor assembly 361. The second housing 220 may move with respect to the first housing 210 based on the driving of the motor assembly 361. For example, the motor assembly 361 may be fastened to the second housing 220 in the housing 200. The motor assembly 361 may be configured to move the second housing 220 with respect to the first housing 210 by providing a driving force to the first housing 210 through the gear assembly 510 linked with the motor assembly 361. For example, the motor assembly 361 may be fastened to the first housing 210 in the housing 200. The motor assembly 361 may be configured to move the second housing 220 with respect to the first housing 210 by providing a driving force to the second housing 220 through the gear assembly 510 linked with the motor assembly 361. However, it is not limited thereto. A position at which the motor assembly 361 is disposed in the housing 200 may be changed to meet the user's needs. With regard to the position at which the motor assembly 361 is disposed, it is described later in FIGS. 9A and 9B.

According to an embodiment, the gear assembly 510 may be linked with the motor assembly 361 to move the second housing 220 with respect to the first housing 210 according to the driving of the motor assembly 361. For example, the gear assembly 510 may be disposed in the housing 200. The gear assembly 510 may include a plurality of gears engaged with each other, which are configured to move the second housing 220 with respect to the first housing 210 according to the driving of the motor assembly 361. A portion (e.g., a rack gear 363) of the plurality of gears may be fastened to the first housing 210. A remaining portion (e.g., the pinion gear 362) engaged with the portion of the plurality of gears may be fastened to the second housing 220. The plurality of gears engaged with each other may be configured to move the second housing 220 with respect to the first housing 210 by the driving force provided from the motor assembly 361.

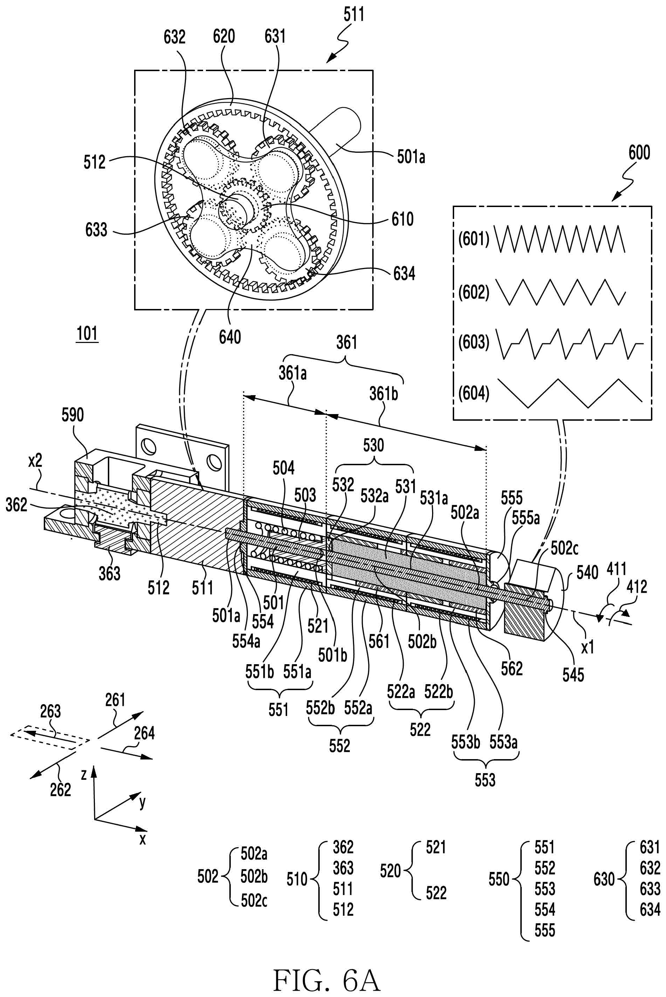

According to an embodiment, the first shaft 501 may include a first end (e.g., a first end 501a of FIG. 6A) coupled with the gear assembly 510 and a second end 501b opposite to the first end 501a. For example, the first shaft 501 may transmit the driving force of the motor assembly 361 to the plurality of gears included in the gear assembly 510 by being engaged with at least a portion of the gear assembly 510. For example, the first shaft 501 may be a portion of the motor assembly 361 that connects the motor assembly 361 and the gear assembly 510 (and/or links the motor assembly 361 with the gear assembly 510). For example, the first end 501a of the first shaft 501 may be a portion of the first shaft 501 that is linked with the gear assembly 510. For example, the first end 501a of the first shaft 501 may be coupled with a reducer 511 of the gear assembly 510. The first end 501a may be positioned in the reducer 511. The first end 501a of the first shaft 501 may provide a driving force for moving the second housing 220 with respect to the first housing 210 by being engaged or linked with at least a portion of gears (e.g., a sun gear 610, a ring gear 620, and a plurality of planetary gears 630 of FIG. 6A) in the reducer 511. For example, the second end 501b of the first shaft 501 may be positioned inside the motor assembly 361. For example, the second end 501b of the first shaft 501 may be disposed in a first motor housing 551 of a motor housing 550 that is coupled with the gear assembly 510 (or the reducer 511). For example, the second end 501b of the first shaft 501 may be a portion configured to receive the driving force of the motor assembly 361 from the rotating member 530 configured to rotate based on the power supplied to the motor assembly 361. The first shaft 501 may be referred to as a driving axis in that it is a configuration for moving the second housing 220 with respect to the first housing 210 through the driving force of the motor assembly 361, but is not limited thereto.

According to an embodiment, the second shaft 502 may be separated from the first shaft 501. For example, the second shaft 502 may be spaced apart from the first shaft 501. The second shaft 502 may face the second end 501b of the first shaft 501. For example, the second shaft 502 may be a portion that provides a haptic feedback through the vibrator 540 based on the power provided to the motor assembly 361. For example, the second shaft 502 may be rotated in the motor assembly 361 (or the motor housing 550) based on the power supplied to the motor assembly 361. The second shaft 502 may be configured to generate a haptic feedback by rotating the vibrator 540 coupled with the second shaft 502 by being rotated in the motor assembly 361. For example, since the second shaft 502 is separated from the first shaft 501, it may be configured to rotate independently of the first shaft 501. Since the first shaft 501 is separated from the second shaft 502 in a state that the second shaft 502 is independently rotatable with respect to the first shaft 501, it may be configured to provide a haptic feedback through the vibrator 540 regardless of movement of the first housing 210 with respect to the second housing 220. The second shaft 502 may be referred to as a vibration axis in that it is a configuration for providing a haptic feedback through rotation, but is not limited thereto.

According to an embodiment, the motor assembly 361 may include the motor housing 550 for accommodating components in the motor assembly 361. For example, the motor housing 550 may include the first motor housing 551 facing the gear assembly 510 (or the reducer 511) and at least partially surrounding the first shaft 501, a second motor housing 552 coupled with the first motor housing 551, and a third motor housing 553 coupled with the second motor housing 552 and spaced apart from the first motor housing 551. The motor housing 550 may include a first motor cover 554 disposed between the first motor housing 551 and the reducer 511, and a second motor cover 555 opposite to the first motor cover 554 and facing the vibrator 540 by being coupled to the third motor housing 553. Each of the first motor housing 551, the second motor housing 552, and the third motor housing 553 may provide a space for components in the motor assembly 361.

According to an embodiment, the plurality of coils 520 may include a first coil 521 disposed along the first shaft 501 and one or more second coils 522 disposed along the second shaft 502. For example, the plurality of coils 520 may at least partially surround the first shaft 501 and the second shaft 502. For example, the plurality of coils 520 may be disposed along a surface of the motor housing 550. For example, the plurality of coils 520 may surround the rotating member 530 coupled with the second shaft 502. The plurality of coils 520 may be configured to cause rotation and/or movement of the rotating member 530 by interacting or cooperating with the rotating member 530 based on current flowing in the plurality of coils 520.

For example, the first coil 521 may be positioned in the first motor housing 551 in which the first shaft 501 is at least partially disposed. For example, the one or more second coils 522 may be positioned in the second motor housing 552 and the third motor housing 553 in which the second shaft 502 is at least partially disposed. For example, the first motor housing 551 may include a first outer frame 551a and a first inner frame 551b disposed in the first outer frame 551a. The first coil 521 may be disposed between the first outer frame 551a and the first inner frame 551b. The first inner frame 551b may at least partially surround the first shaft 501. The first coil 521 may be separated from the first shaft 501 by the first inner frame 551b.

For example, the one or more second coils 522 may include a second coil 522a and a third coil 522b arranged along the second shaft 502 and/or the rotating member 530. For example, the second coil 522a may be positioned in the second motor housing 552 coupled with the first motor housing 551. The second motor housing 552 may include a second outer frame 552a and a second inner frame 552b disposed in the second outer frame 552a. The second coil 522a may be disposed between the second outer frame 552a and the second inner frame 552b. The second inner frame 552b may at least partially surround the second shaft 502. The second coil 522a may be separated from the second shaft 502 (and/or the rotating member 530 coupled with the second shaft 502) by the second inner frame 552b. For example, the third coil 522b may be positioned in the third motor housing 553 coupled with the second motor housing 552. The third motor housing 553 may include a third outer frame 553a and a third inner frame 553b disposed in the third outer frame 553a. The third coil 522b may be disposed between the third outer frame 553a and the third inner frame 553b. The third inner frame 553b may at least partially surround the second shaft 502. The third coil 522b may be separated from the second shaft 502 (and/or the rotating member 530 coupled with the second shaft 502) by the third inner frame 553b. However, the above-described embodiments are examples and are not limited thereto. For example, the motor housing 550 may be integrally formed. For example, the first motor housing 551, the second motor housing 552, the third motor housing 553, the first motor cover 554, and the second motor cover 555 may form one motor housing 550 integrally formed. For example, the first motor housing 551, the second motor housing 552, and the third motor housing 553 may be portions in which the coils 521, 522a, and 522b inside the motor housing 550 integrally formed are disposed, respectively. However, it is not limited thereto.

For example, the first coil 521 may be a coil for moving the rotating member 530 toward the first shaft 501 by interacting with the rotating member 530 among the plurality of coils 520. For example, the first coil 521 may form a magnetic field based on current flowing in the first coil 521. The first coil 521 may be configured to move the rotating member 530 toward the first shaft 501 through a magnetic force with the rotating member 530, caused by the magnetic field formed by the first coil 521.

For example, the one or more second coils 522 may be a coil for rotating the rotating member 530 by interacting with the rotating member 530 among the plurality of coils 520. For example, the one or more second coils 522 may form a magnetic field based on current flowing in the one or more second coils 522. The one or more second coils 522 may be configured to rotate the rotating member 530 through a magnetic field formed by the one or more second coils 522.

According to an embodiment, the rotating member 530 may be coupled with the second shaft 502 to rotate the second shaft 502 based on current flowing in the one or more second coils 522. The rotating member 530 may include a fastening hole 532a configured such that the second end 501b of the first shaft 501 is inserted. For example, the rotating member 530 may be penetrated by the second shaft 502. The rotating member 530 may cover at least a portion of the second shaft 502. For example, the rotating member 530 may have magnetic properties. The rotating member 530 may be configured to rotate the second shaft 502 coupled with the rotating member 530 by being rotated by a magnetic field formed based on current flowing in the one or more second coils 522.

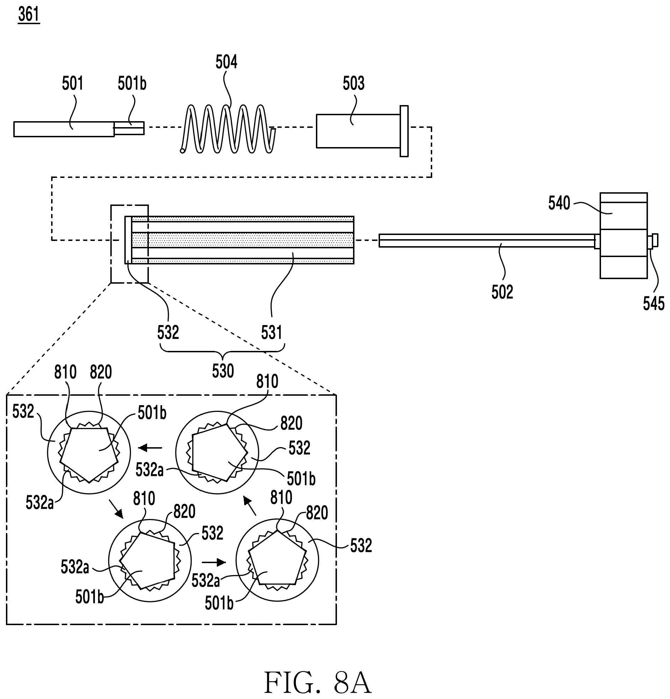

For example, the rotating member 530 may be configured to be fastened with the first shaft 501 by moving toward the first shaft 501 surrounded by the first coil 521 by a magnetic field formed based on current flowing in the first coil 521. The fastening hole 532a of the rotating member 530 may be formed toward the first shaft 501 to fasten the rotating member 530 moved by the first coil 521 with the first shaft 501. For example, the fastening hole 532a may face the second end 501b of the first shaft 501. The fastening hole 532a may have a shape and/or a structure for being fastened with the second end 501b. With regard to the shape of the fastening hole 532a for being fastened with the second end 501b, it is described later in FIG. 8A and the following.

According to an embodiment, the rotating member 530 may include a magnet 531 including a through hole 531a accommodating at least a portion of the second shaft 502, and a fastening member 532 attached to the magnet 531 toward the second end 501b of the first shaft 501 and forming the fastening hole 532a. The first coil 521 may be configured to move the rotating member 530 through a magnetic force with the fastening member 532 based on current flowing through the first coil 521. The one or more second coils 522 may be configured to rotate the rotating member 530 through a magnetic field formed by the magnet 531 based on current flowing through the one or more second coils 522.

For example, the magnet 531 may be a portion of the rotating member 530 for rotating the rotating member 530 (or the second shaft 502) by being rotated based on current flowing in the one or more second coils 522. For example, the through hole 531a may be at least partially penetrated by the second shaft 502. In order to rotate the second shaft 502 according to the rotation of the magnet 531, the through hole 531a may have a shape corresponding to a shape of at least a portion of the second shaft 502, but is not limited thereto. For example, the fastening member 532 may be a portion of the rotating member 530 for coupling the rotating member 530 with the second end 501b of the first shaft 501 by moving toward the first shaft 501 based on current flowing in the first coil 521. The fastening member 532 may include a magnetic material (e.g., metal) that receives a magnetic force by a magnetic field formed by the current flowing in the first coil 521, but is not limited thereto. For example, the rotating member 530 may include an adhesive member 533 interposed between the fastening member 532 and the magnet 531 to attach the fastening member 532 to the magnet 531, but is not limited thereto.

According to an embodiment, the motor assembly 361 may include a stopper 503 slidably coupled with the first shaft 501 and contacting the rotating member 530, and an elastic member 504 pressuring the stopper 503 toward the rotating member 530. For example, the stopper 503 may cover at least a portion of the first shaft 501. The stopper 503 may be in contact with the fastening member 532 facing the second end 501b of the first shaft 501. For example, the stopper 503 may be slidable with respect to the first shaft 501 in the first motor housing 551. For example, the elastic member 504 may be configured such that the stopper 503 maintains the contact with the rotating member 530 by pressuring the stopper 503 toward the rotating member 530 in the first motor housing 551. For example, the elastic member 504 may at least partially surround the stopper 503 and/or the first shaft 501. The elastic member 504 may press the stopper 503 toward the rotating member 530, for example, by being positioned between the first motor cover 554 and the rotating member 530.

For example, based on current flowing in the first coil 521, by a magnetic force between the magnetic field formed by the first coil 521 and the fastening member 532, the rotating member 530 may move toward the first shaft 501. The stopper 503 may compress the elastic member 504 by moving by the rotating member 530 moving toward the first shaft 501. The fastening hole 532a of the fastening member 532 may be fastened with the second end 501b of the first shaft 501. For example, in a case that the flow of current in the first coil 521 is bypassed and/or blocked, by a restoring force of the elastic member 504, the stopper 503 may separate the rotating member 530 from the first shaft 501 by pressuring the rotating member 530. The fastening hole 532a of the fastening member 532 may be spaced apart from the second end 501b of the first shaft 501 by the restoring force of the elastic member 504.

According to an embodiment, the second shaft 502 may include a first portion 502a configured to be fastened with the rotating member 530, and a second portion 502b connected with the first portion 502a and to guide the movement of the rotating member 530. For example, the first portion 502a may be a portion configured to be fastened with the magnet 531. The second shaft 502 may be rotated by the rotation of the magnet 531 by being fastened with the magnet 531 through the first portion 502a. For example, the first portion 502a may be fastened to the through hole 531a of the magnet 531. The first portion 502a may have a shape corresponding to the shape of the through hole 531a, but is not limited thereto. For example, the second portion 502b may at least partially penetrate the magnet 531. The second portion 502b may be inserted into the through hole 531a of the magnet 531. For example, the second portion 502b may guide movement of the magnet 531 with respect to the first shaft 501 by at least partially penetrating the magnet 531. The magnet 531 may be rotatable with respect to the second portion 502b.

According to an embodiment, the vibrator 540 may be coupled to the second shaft 502 to provide a haptic feedback (e.g., a haptic feedback 600 of FIG. 6A) based on the rotation of the second shaft 502. For example, the vibrator 540 may be spaced apart from the rotating member 530. The vibrator 540 may be positioned outside the motor housing 550 in which the rotating member 530 is positioned. For example, the vibrator 540 may be disposed at an end of the second shaft 502. The vibrator 540 may generate vibration by rotating together with the second shaft 502. For example, the second shaft 502 may include a third portion 502c for fastening with the vibrator 540. The vibrator 540 may include a coupling hole 541 for the third portion 502c to be inserted. The coupling hole 541 may have a shape corresponding to a shape of the third portion 502c, but is not limited thereto. According to an embodiment, the second shaft 502 may penetrate the second motor cover 555 and be coupled with the vibrator 540. According to an embodiment, the motor assembly 361 may include a fastening pin 545 to reduce deviation of the vibrator 540 from the third portion 502c by being fastened to the third portion 502c of the second shaft 502.

According to an embodiment, the gear assembly 510 may include the reducer 511 that reduces a rotation velocity of the second shaft 502 by being engaged with the first end 501a of the first shaft 501. The gear assembly 510 may include the pinion gear 362 connected with the reducer 511, and a rack gear 363 engaged with the pinion gear 362 and disposed along a moving direction of the second housing 220 with respect to the first housing 210 in the housing 200 to move the second housing 220 with respect to the first housing 210 according to rotation of the pinion gear 362.

For example, the gear assembly 510 may include a third shaft 512 that connects the pinion gear 362 and a plurality of gears in the reducer 511. For example, the reducer 511 may be engaged with the first shaft 501 through the plurality of gears in the reducer 511. In a case that the first shaft 501 rotates together with the second shaft 502 by the rotating member 530, a rotation velocity of the third shaft 512 connected with the pinion gear 362 through a gear ratio between the plurality of gears in the reducer 511 may be smaller than a rotation velocity of the first shaft 501. Through the gear ratio, since the rotation velocity of the pinion gear 362 is smaller than the rotation velocity of the first shaft 501, the driving force for moving the second housing 220 with respect to the first housing 210 may relatively increase as the pinion gear 362 is engaged with the rack gear 363.

For example, the second shaft 502 may provide the rotation axis x1 of the vibrator 540 by being rotated by the rotating member 530. In a case that the rotating member 530 is coupled with the first shaft 501 through the fastening hole 532a, the rotation axis x1 may correspond to a rotation axis of the first shaft 501, the third shaft 512, and/or the pinion gear 362 by the rotating member 530. For example, by being rotated in a first rotation direction 411 and a second rotation direction 412 opposite to the first rotation direction 411 by the rotating member 530, the second shaft 502 may be configured to rotate the vibrator 540 coupled to the second shaft 502 in the first rotation direction 411 and/or the second rotation direction 412. In a case that the rotating member 530 is fastened with the second end 501b of the first shaft 501 through the fastening hole 532a, the first shaft 501 and the pinion gear 362 may be rotated in the first rotation direction 411 and the second rotation direction 412. For example, the rack gear 363 fastened to the second housing 220 may be configured to move the second housing 220 in the first direction 261 with respect to the first housing 210 by rotation of the pinion gear 362 in the first rotation direction 411, or to move the second housing 220 in the second direction 262 opposite to the first direction 261 with respect to the first housing 210 by rotation of the pinion gear 362 in the second rotation direction 412 opposite to the first rotation direction 411. However, the above-described embodiment is an example and is not limited thereto.

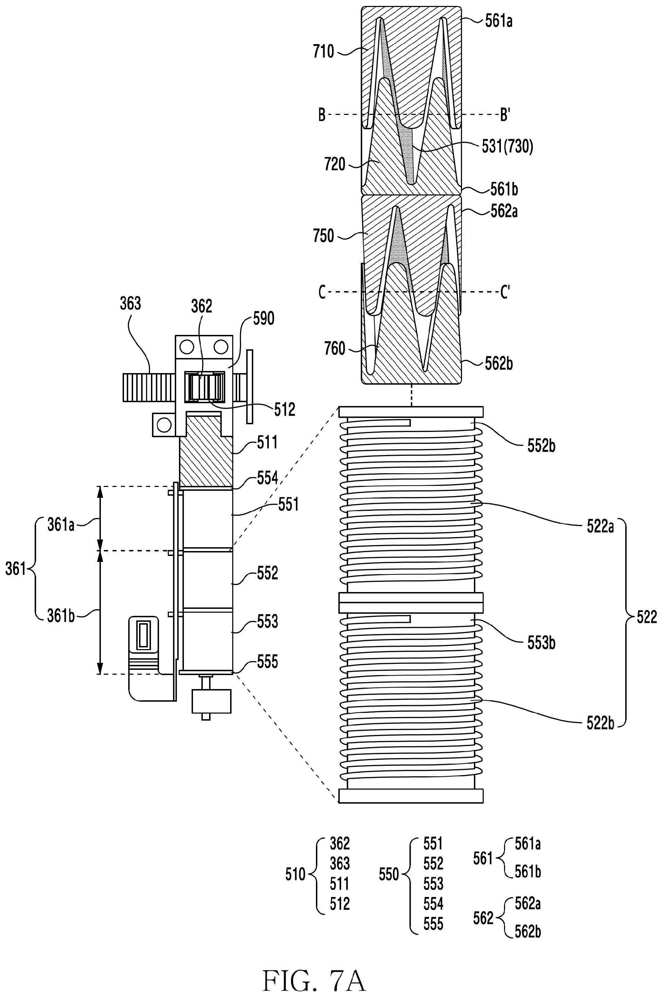

According to an embodiment, the motor assembly 361 may include a first set of magnetic members 561 and a second set of magnetic members 562 disposed between the rotating member 530 and the one or more second coils 522. The first set of magnetic members 561 may be at least partially disposed between the magnet 531 of the rotating member 530 and the second coil 522a. The first set of magnetic members 561 may have different magnetic poles from each other based on current flowing through the second coil 522a. The second set of magnetic members 562 may be at least partially disposed between the magnet 531 and the third coil 522b. The second set of magnetic members 562 may have different magnetic poles from each other based on current flowing through the third coil 522b. The second set of magnetic members 562 may be configured to rotate the rotating member 530 through a magnetic force with a plurality of magnetic poles (e.g., a plurality of magnetic poles 730 of FIG. 7A) of the magnet 531, together with the first set of magnetic members 561.

For example, the first set of magnetic members 561 may be disposed in the second motor housing 552 at which the second coil 522a is positioned. The first set of magnetic members 561 may be separated from the second coil 522a by the second inner frame 552b of the second motor housing 552. The first set of magnetic members 561 may at least partially surround the magnet 531 in the second motor housing 552. For example, the second set of magnetic members 562 may be disposed in the third motor housing 553 at which the third coil 522b is positioned. The second set of magnetic members 562 may be separated from the third coil 522b by the third inner frame 553b of the third motor housing 553. The second set of magnetic members 562 may at least partially surround the magnet 531 in the third motor housing 553.

For example, the first set of magnetic members 561 and the second set of magnetic members 562 may be disposed to rotate the magnet 531 based on current flowing in the second coil 522a and the third coil 522b, respectively. For example, the first set of magnetic members 561 may include a first magnetic member 561a and a second magnetic member 561b facing the first magnetic member 561a having different magnetic poles from each other based on current flowing in the second coil 522a. The second set of magnetic members 562 may include a third magnetic member 562a and a fourth magnetic member 562b facing the third magnetic member 562a having different magnetic poles from each other based on current flowing in the third coil 522b. For example, the second magnetic member 561b may be attached to the third magnetic member 562a. In a case that a current flow direction of the current flowing in the second coil 522a is changed, the magnetic poles of the first magnetic member 561a and the second magnetic member 561b may be changed. In a case that a current flow direction of the current flowing in the third coil 522b is changed, the magnetic poles of the third magnetic member 562a and the fourth magnetic member 562b may be changed. As the directions of the current flowing in the second coil 522a and the third coil 522b are changed, the magnetic poles of the first set of magnetic members 561 and the second set of magnetic members 562 are changed, and thus the magnet 531 may be rotated by a magnetic force with the first set of magnetic members 561 and the second set of magnetic members 562. With regard to the rotation of the magnet 531 by the first set of magnetic members 561 and the second set of magnetic members 562, it is described later in FIG. 7A and the following. The motor assembly 361 may provide a haptic feedback through the vibrator 540 while providing the driving force of the second housing 220 with respect to the first housing 210 through a separation structure of the first shaft 501 and the second shaft 502 and a movement structure of the rotating member 530. Since the motor assembly 361 provides the haptic feedback, the actuator 509 for the haptic feedback in the electronic device 101 may be omitted. By omitting the actuator 509, the electronic device 101 may provide an additional space for another electronic component (e.g., the one or more cameras 250) in the electronic device 101 and increase a space efficiency in the electronic device 101.

It has been described that the motor assembly 361 is rotated and/or moved by the plurality of coils 520 and the magnetic members 561 and 562, but is not limited thereto. The rotating member 530 may be configured such that the second shaft 502 rotates with respect to the first shaft 501 or the first shaft 501 rotates with respect to the second shaft 502 through various structures (or methods) for rotating and/or moving the rotating member 530 in addition to rotation and/or movement through a magnetic force and/or electromagnetic induction.

According to an embodiment, the electronic device 101 may include a flexible printed circuit board 580 (e.g., the FPCB 325 of FIG. 3A) for supplying power to the motor assembly 361. For example, the flexible printed circuit board 580 may electrically connect the motor assembly 361 with another PCB (e.g., the PCB 324 of FIG. 3A) of the electronic device 101. For example, a processor (e.g., the processor 120 of FIG. 1) of the electronic device 101 may be configured to control the power supply to the motor assembly 361 through the flexible printed circuit board 580, or to control the flow of current of the plurality of coils 520. For example, the flexible printed circuit board 580 may include a structure for being coupled with the motor housing 550. The flexible printed circuit board 580 may include, for example, first fastening holes 585a into which first protrusions 556a of the first motor housing 551 are inserted, second fastening holes 585b into which second protrusions 556b of the second motor housing 552 are inserted, and third fastening holes 585c into which third protrusions 556c of the third motor housing 553 are inserted. The flexible printed circuit board 580 may be referred to as a rigid flexible printed circuit board (RFPCB) in that it includes a portion having relatively high rigidity to be coupled with the motor housing 550, but is not limited thereto.

According to an embodiment, the electronic device 101 may include a fastening structure 590 for fixing a position of the motor assembly 361 (or a driving unit 360) in the housing 200. The fastening structure 590 may accommodate the pinion gear 362 of the gear assembly 510. In a case that the rack gear 363 is fastened to the first housing 210, for example, the fastening structure 590 may be fastened to the second housing 220. In a case that the rack gear 363 is fastened to the second housing 220, for example, the fastening structure 590 may be fastened to the first housing 210. For example, the fastening structure 590 may be coupled with the reducer 511. The fastening structure 590 may include guide structures for guiding a moving direction of the rack gear 363 that moves according to the rotation of the pinion gear 362, but is not limited thereto.

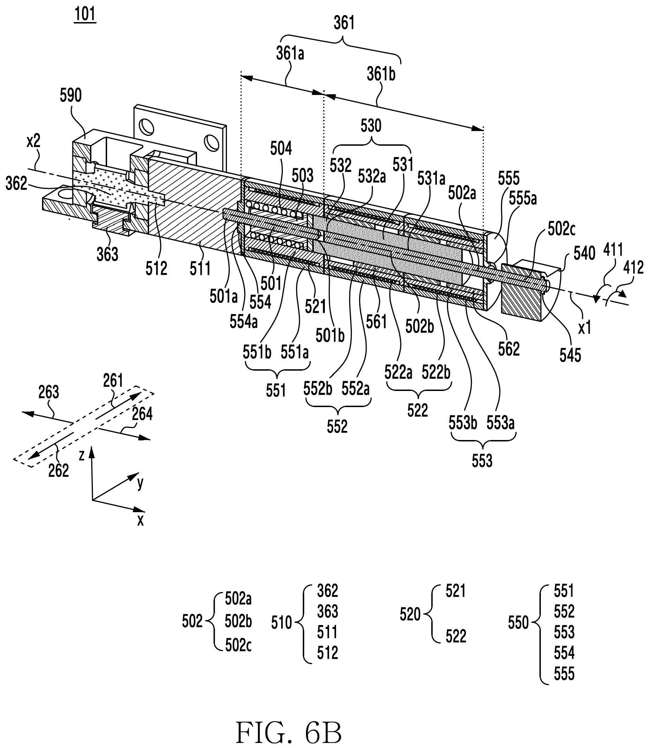

As the electronic device 101 according to the above-described embodiment is configured to provide a haptic feedback through the motor assembly 361 for the movement of the first housing 210 with respect to the second housing 220, it may increase a space efficiency in the electronic device 101. By including a structure from which the first shaft 501 for driving the second housing 220 and the second shaft 502 for providing a haptic feedback through the vibrator 540 are separated, the motor assembly 361 may be configured to provide the haptic feedback to the user or to move the second housing 220 with respect to the first housing 210 according to a user input. The motor assembly 361 may provide a state in which the second shaft 502 is rotatable with respect to the first shaft 501 and a state in which the first shaft 501 is rotatable together with the second shaft 502 by including the rotating member 530 rotated or moved by the plurality of coils 520. A description related to a change in a state according to the movement of the rotating member 530 is described below through FIGS. 6A and 6B.

FIG. 6A is a cross-sectional view of a driving unit of an exemplary electronic device in an unfastened state, which is taken along line A-A' of FIG. 5B. FIG. 6B is a cross-sectional view of a driving unit of an exemplary electronic device in a fastened state, which is taken along line A-A' of FIG. 5B.

Referring to FIGS. 6A and 6B, an electronic device 101 may include a housing 200 that includes a first housing (e.g., the first housing 210 of FIG. 2A) and a second housing 220 movably coupled to the first housing 210. The electronic device 101 may include a motor assembly 361 disposed in the housing 200. The electronic device 101 may include a gear assembly 510 linked with the motor assembly 361 to move the second housing 220 with respect to the first housing 210 according to driving of the motor assembly 361. The motor assembly 361 may include a first shaft 501 including a first end 501a coupled with the gear assembly 510 and a second end 501b opposite to the first end 501a. The motor assembly 361 may include a second shaft 502 separated from the first shaft 501. The motor assembly 361 may include a plurality of coils 520 including a first coil 521 disposed along the first shaft 501 and one or more second coils 522 disposed along the second shaft 502. The motor assembly 361 may include a rotating member 530, coupled with the second shaft 502 to rotate the second shaft 502 based on current flowing in the one or more second coils 522, including a fastening hole 532a configured to insert the second end 501b of the first shaft 501. The motor assembly 361 may include a vibrator 540 coupled to the second shaft 502 to provide a haptic feedback 600 based on the rotation of the second shaft 502.

For example, the rotating member 530 may include a magnet 531 including a through hole 531a that accommodates at least a portion of the second shaft 502, and a fastening member 532 that is attached to the magnet 531 toward the second end 501b of the first shaft 501 and forms the fastening hole 532a. For example, the one or more second coils 522 may include a second coil 522a and a third coil 522b arranged along the magnet 531. For example, the motor assembly 361 may include a first set of magnetic members 561 disposed at least partially between the magnet 531 and the second coil 522a, and a second set of magnetic members 562 disposed at least partially between the magnet 531 and the third coil 522b.

For example, the motor assembly 361 may include a stopper 503 coupled with the first shaft 501 and contacting the rotating member 530, and an elastic member 504 pressuring the stopper 503 toward the rotating member 530. For example, the gear assembly 510 may include a reducer 511 that reduces a rotation velocity of the second shaft 502 by being engaged with the first end 501a of the first shaft 501, a pinion gear 362 connected with the reducer 511, and a rack gear 363 configured to move the second housing 220 with respect to the first housing 210 according to rotation of the pinion gear 362 by being engaged with the pinion gear 362.

Hereinafter, overlapping descriptions of configurations having the same reference numerals as described in FIGS. 5A, 5B, and 5C will be omitted.

Referring to FIGS. 6A and 6B, the rotating member 530 may provide an unfastened state and a fastened state by moving with respect to the first shaft 501 based on current flowing in the first coil 521. The unfastened state may be a state in which the second end 501b of the first shaft 501 is separated from the fastening hole 532a such that the second shaft 502 is rotatable with respect to the first shaft 501 to provide the haptic feedback 600 through the vibrator 540. The fastened state may be a state in which the second end 501b of the first shaft 501 is inserted into the fastening hole 532a such that the first shaft 501 is rotatable with respect to the second shaft 502 to move the second housing 220 with respect to the first housing 210 as the rotating member 530 moves with respect to the first shaft 501.

For example, the unfastened state of the electronic device 101 may be a state in which the rotating member 530 is spaced apart from the first shaft 501 (or the second end 501b of the first shaft 501). For example, the unfastened state may be a state in which, as the first shaft 501 is positioned outside the fastening hole 532a, the second shaft 502 coupled with the rotating member 530 is rotatable independently of the first shaft 501 according to the rotation of the rotating member 530. For example, the unfastened state may be a state in which the second shaft 502 among the first shaft 501 and the second shaft 502 is rotatable based on power provided to the motor assembly 361. For example, the unfastened state may be a state in which no current flows in the first coil 521. For example, the unfastened state may be a state in which the haptic feedback 600 may be provided through the vibrator 540 coupled with the first shaft 501 by rotation of the first shaft 501. For example, the unfastened state may be a state in which the rotating member 530 is fastened with a first portion 502a of the second shaft 502. The unfastened state may be, for example, a state in which the second shaft 502 is rotatable by the rotation of the rotating member 530 as the through hole 531a of the magnet 531 of the rotating member 530 is fastened with the first portion 502a of the second shaft 502. The second shaft 502 may provide the haptic feedback 600 through the vibrator 540 coupled to the second shaft 502 (or the rotating portion 502a of the second shaft 502) in the unfastened state. For example, the unfastened state may be referred to as a third state of the electronic device 101 in that it is a state in which the rotating member 530 and the first shaft 501 are unfastened and the rotating member 530 and the second shaft 502 are fastened.

For example, the fastened state of the electronic device 101 may be a state in which the rotating member 530 is coupled with the first shaft 501 (or the second end 501b of the first shaft 501). For example, the fastened state may be a state in which the first shaft 501 coupled with the rotating member 530 is rotatable according to the rotation of the rotating member 530 as the first shaft 501 is at least partially positioned inside the fastening hole 532a. For example, the fastened state may be a state in which the first shaft 501 is rotatable with respect to the second shaft 502 based on power provided to the motor assembly 361. For example, the fastened state may be a state in which the rotating member 530 is separated from the first portion 502a of the second shaft 502 by moving along a second portion 502b of the second shaft 502. Since the rotating member 530 is spaced apart from the first portion 502a, it may be rotatable with respect to the second portion 502b. Since the rotating member 530 is rotatable with respect to the second shaft 502, it may be configured to rotate the first shaft 501 coupled with the rotating member 530 with respect to the second shaft 502. For example, the fastened state may be a state in which current flows in the first coil 521. The electronic device 101 may be configured to maintain the fastened state while current flows in the first coil 521. For example, the fastened state may be a state in which the second housing 220 is movable with respect to the first housing 210 as the second shaft 502 is fastened to the rotating member 530 through the fastening hole 532a and the first shaft 501 rotates according to the rotation of the rotating member 530. For example, the fastened state may be referred to as a fourth state of the electronic device 101 in that it is a state in which the rotating member 530 and the first shaft 501 are fastened and the rotating member 530 and the second shaft 502 are unfastened. However, the above-mentioned embodiment is an example and is not limited thereto.

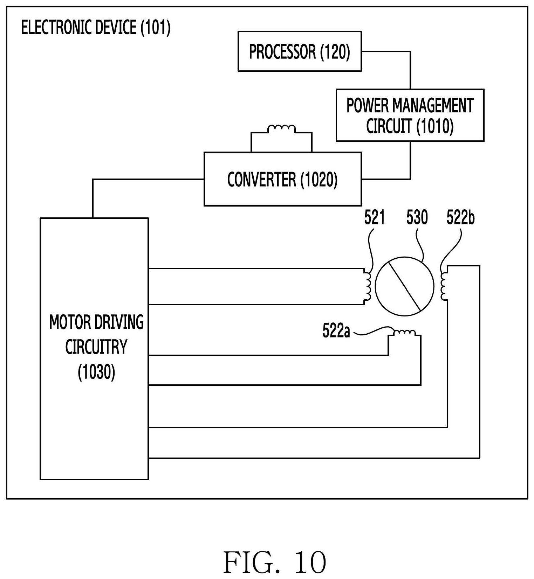

For example, when referring to FIG. 6A, current may flow in at least one second coil (or the one or more second coils) 522 in the unfastened state. The at least one second coil 522 may be configured such that a direction of the current flowing in the at least one second coil 522 is changed through a power management circuit (e.g., a power management circuit 1010 of FIG. 10) controlled by a processor (e.g., the processor 120 of FIG. 1) of the electronic device 101. As the direction of the current flowing in the at least one second coil 522 is changed, magnetic poles of the fastening members 561 and 562 surrounded by the at least one second coil 522 may be changed, respectively. The magnet 531 of the rotating member 530 surrounded by the fastening members 561 and 562 may rotate the rotating member 530 through a magnetic force with the fastening members 561 and 562 as the magnetic poles of the fastening members 561 and 562 become different, respectively. The second shaft 502 coupled with the rotating member 530 through the through hole 531a of the magnet 531 may be rotated in a first rotation direction 411 and a second rotation direction 412 opposite to the first rotation direction 411, through the rotating member 530, which is rotated. The vibrator 540 coupled to the second shaft 502 may provide the haptic feedback 600 by being rotated in the first rotation direction 411 and the second rotation direction 412 along the second shaft 502.

For example, the processor 120 may be configured to adjust intensity of the current flowing in the at least one second coil 522 through the power management circuit 1010 in the unfastened state and/or a change cycle in a direction in which the current flows. As the intensity of the current flowing in the at least one second coil 522 and/or the change cycle in the direction in which the current flows are adjusted, a rotation velocity and/or a rotation cycle of the rotating member 530, the second shaft 502, and/or a vibration generation cycle may be different. As a rotation velocity and/or a rotation cycle of the vibrator 540 varies, the vibrator 540 may be configured to provide various haptic patterns 601, 602, 603, and 604 to a user. For example, the processor 120 may be configured to provide the haptic feedback 600 through the rotating member 530 or to move the second housing 220 with respect to the first housing 210 by adjusting the intensity of the current flowing in the at least one second coil 522 through the power management circuit 1010 in the unfastened state. However, the above-mentioned embodiments are examples and are not limited thereto.

For example, when referring to FIGS. 6A and 6B sequentially, the electronic device 101 may be changed from the unfastened state to the fastened state. Based on current flowing in the first coil 521, the rotating member 530 may move in a third direction 263 through a magnetic force between a magnetic field formed by the first coil 521 and the fastening member 532. By moving in the third direction 263, the rotating member 530 may press the stopper 503 that at least partially covers the first shaft 501 and the elastic member 504 that supports the stopper 503, in the third direction 263. The fastening hole 532a of the fastening member 532 disposed toward the first shaft 501 may be coupled with the second end 501b of the first shaft 501 by moving in the third direction 263. The through hole 531a of the magnet 531 may move to be rotatable with respect to the second shaft 502 by being spaced apart from the first portion 502a of the second shaft 502. While current flows in the first coil 521, the fastened state may be maintained by the magnetic field formed by the first coil 521.

For example, referring to FIG. 6B, current may flow in the at least one second coil 522 in the fastened state. As a direction of the current flowing in the at least one second coil 522 is changed, the magnetic poles of the fastening members 561 and 562 surrounded by the at least one second coil 522 may be changed, respectively. The magnet 531 of the rotating member 530 surrounded by the fastening members 561 and 562 may rotate the rotating member 530 through a magnetic force with the fastening members 561 and 562 as the magnetic poles of the fastening members 561 and 562 become different, respectively. The first shaft 501 coupled with the rotating member 530 through the fastening hole 532a of the fastening member 532 attached to the magnet 531 may be rotated in the first rotation direction 411 and the second rotation direction 412 opposite to the first rotation direction 411, through the rotating member 530, which is rotated. The pinion gear 362 of the gear assembly 510 coupled and/or linked with the first end 501a of the first shaft 501 may rotate in the first rotation direction 411 and the second rotation direction 412 based on the rotation of the first shaft 501. The rack gear 363 engaged with the pinion gear 362 may move the second housing 220 in a first direction 261 and a second direction 262 opposite to the first direction 261 with respect to the first housing 210 according to the rotation of the pinion gear 362 in the first rotation direction 411 and the second rotation direction 412. For example, in a case that the rack gear 363 is fastened to the second housing 220 and the motor assembly 361 and the pinion gear 362 are fastened to the first housing 210, according to the rotation of the pinion gear 362 in the first rotation direction 411, as the rack gear 363 moves in the first direction 261, it may move the second housing 220 fastened with the rack gear 363 in the first direction 261 with respect to the first housing 210. According to the rotation of the pinion gear 362 in the second rotation direction 412 opposite to the first rotation direction 411, as the rack gear 363 moves in the second direction 262 opposite to the first direction 261, it may move the second housing 220 fastened with the rack gear 363 in the second direction 262 with respect to the first housing 210. However, the above-mentioned embodiments are examples and are not limited thereto.

For example, when referring to FIGS. 6B and 6A sequentially, the electronic device 101 may be changed from the fastened state to the unfastened state. Based on the first coil 521 in which a flow of current is bypassed and/or blocked, the rotating member 530 may move in the fourth direction 264 by the elastic member 504 pressuring the rotating member 530 in the fourth direction 264 opposite to the third direction 263 by a restoring force, and the stopper 503. The rotating member 530 may be spaced apart from the first shaft 501 by moving in the fourth direction 264. The fastening hole 532a of the fastening member 532 disposed toward the first shaft 501 may be separated from the second end 501b of the first shaft 501 by moving in the fourth direction 264. The through hole 531a of the magnet 531 may move to enable the second shaft 502 to rotate by rotation of the magnet 531 by being fastened with the first portion 502a of the second shaft 502. While current does not flow in the first coil 521, the unfastened state may be maintained.

According to an embodiment, the reducer 511 of the gear assembly 510 may be engaged with the first end 501a of the first shaft 501. In the fastened state in which the rotating member 530 is fastened with the first shaft 501, the reducer 511 may be configured to adjust and/or control a rotation velocity of a third shaft 512 such that the rotation velocity of the third shaft 512, which is connected with the reducer 511 and configured to rotate the pinion gear 362, is smaller than a rotation velocity of the first shaft 501. The reducer 511 may provide a driving force for moving the second housing 220 with respect to the first housing 210 through rotation of the third shaft 512 obtained based on the rotation of the first shaft 501. The reducer 511 may be referred to as a gear box in that it includes a plurality of gears engaged with the first end 501a of the first shaft 501, but is not limited thereto.

For example, the gear assembly 510 may include a sun gear 610 for changing a rotation velocity of the second shaft 502 in the fastened state, a ring gear 620 surrounding the sun gear 610, a plurality of planetary gears 630 engaged between the sun gear 610 and the ring gear 620, and a wheel 640 configured to rotate together with the plurality of planetary gears 630 by being coupled with each of the plurality of planetary gears 630. For example, the first end 501a of the first shaft 501 may be coupled to the sun gear 610. A rotation velocity of the first shaft 501 may correspond to a rotation velocity of the sun gear 610. For example, the third shaft 512 of the gear assembly 510 may extend from the pinion gear 362 to the wheel 640. A rotation velocity of the wheel 640 and the third shaft may correspond to a rotation velocity of the pinion gear 362. In a case that the rotating member 530 rotates in the fastened state, the sun gear 610 coupled with the first end 501a of the first shaft 501 may rotate. Each of the planetary gears 631, 632, 633, and 634 engaged with the sun gear 610 may rotate between the sun gear 610 and the ring gear 620 with respect to the sun gear 610. The wheel 640 coupled with each of the planetary gears 631, 632, 633, and 634 may rotate the third shaft 512 and the pinion gear 362 by rotating together with the planetary gears 631, 632, 633, and 634. Due to a gear ratio between the sun gear 610 and the ring gear 620, a rotation velocity of the pinion gear 362 may be smaller than a rotation velocity of the first shaft 501. For example, in the fastened state, the first shaft 501 may cause rotation of the third shaft 512 linked with the reducer 511. Due to the gear ratio between the sun gear 610 and the ring gear 620, a rotation velocity of the third shaft 512 in the fastened state in which the rotating member 530 is fastened to the first shaft 501 may be smaller than a rotation velocity of the first shaft 501 in the fastened state.

According to an embodiment, the motor assembly 361 may include a first region 361a in which the first coil 521 is disposed and a second region 361b in which the one or more second coils 522 are disposed. The rotating member 530 may be positioned in the second region 361b in the unfastened state. The rotating member 530 may be partially positioned in the first region 361a by sliding in the motor assembly 361 while changing from the unfastened state to the fastened state.

For example, the first region 361a may be a region of a motor housing 550 in which a first motor housing 551 and a first motor cover 554 are positioned. The second region 361b may be a region of the motor housing 550 in which a second motor housing 552, a third motor housing 553, and a second motor cover 555 are positioned.

For example, when referring to FIG. 6A, in the unfastened state, the rotating member 530 may be positioned in the second motor housing 552 and the third motor housing 553 by the stopper 503 and the elastic member 504. The rotating member 530 may be surrounded by the at least one second coil 522. The rotating member 530 may be at least partially covered by the magnetic members 561 and 562. For example, when referring to FIGS. 6A and 6B sequentially, the rotating member 530 may slide in the third direction 263 in the motor housing 550 based on current flowing in the first coil 521. The fastening member 532 and at least a portion of the magnet 531 of the rotating member 530 may be positioned in the first motor housing 551. As the fastening member 532 including the fastening hole 532a is positioned in the first motor housing 551, the fastening hole 532a may be fastened with the first shaft 501 in the first motor housing 551. For example, when referring to FIGS. 6B and 6A sequentially, based on the first coil 521 in which a flow of current is bypassed and/or blocked, the rotating member 530 may slide in the fourth direction 264 opposite to the third direction 263 by a restoring force of the elastic member 504. The rotating member 530 may be positioned in the second motor housing 552 and the third motor housing 553 by sliding in the fourth direction 264. However, the above-described embodiments are examples and are not limited thereto.

According to an embodiment, the rotating member 530 may be slidably coupled to the second shaft 502 in the motor assembly 361. For example, the magnet 531 of the rotating member 530 may include the through hole 531a accommodating the second shaft 502 and slidable with respect to the second shaft 502. For example, since the through hole 531a is slidable with respect to the second shaft 502, the rotating member 530 may be slidable in the third direction 263 and the fourth direction 264 opposite to the third direction 263 with respect to the second shaft 502 in the motor housing 550.

According to an embodiment, the first shaft 501 and the second shaft 502 may be concentric with each other. For example, a rotation axis x1 of the second shaft 502 may correspond to a rotation axis x2 of the first shaft 501. For example, a rotation axis of the vibrator 540 and/or the rotating member 530 provided by the second shaft 502 may correspond to a rotation axis of the sun gear 610 provided by the first shaft 501. For example, the rotation axis x1 of the second shaft 502 and the rotation axis x2 of the first shaft 501 may correspond to a moving axis of the rotating member 530. Since the first shaft 501 and the second shaft 502 are concentric, the rotating member 530 may be configured to provide the unfastened state and the fastened state through axial movement (e.g., movement in the third direction 263 and the fourth direction 264).

According to an embodiment, the vibrator 540 may include a weight eccentric with respect to the second shaft 502. For example, the vibrator 540 may have a mass eccentric with respect to the rotation axis x1 of the second shaft 502. Since the vibrator 540 is eccentric with respect to the rotation axis x1 of the second shaft 502, the vibrator 540 may be configured to provide the haptic feedback 600 by rotation of the second shaft 502. For example, the vibrator 540 may be referred to as an eccentric mass, but is not limited thereto.

The electronic device 101 according to the above-described embodiment may provide various user experiences by including the motor assembly 361 configured to provide the unfastened state capable of providing the haptic feedback 600 based on the rotation of the second shaft 502 and the fastened state in which the second housing 220 is movable with respect to the first housing 210 based on the rotation of the first shaft 501. The electronic device 101 may improve a space efficiency for disposing other electronic components in the electronic device 101 by providing the haptic feedback 600 through the motor assembly 361.

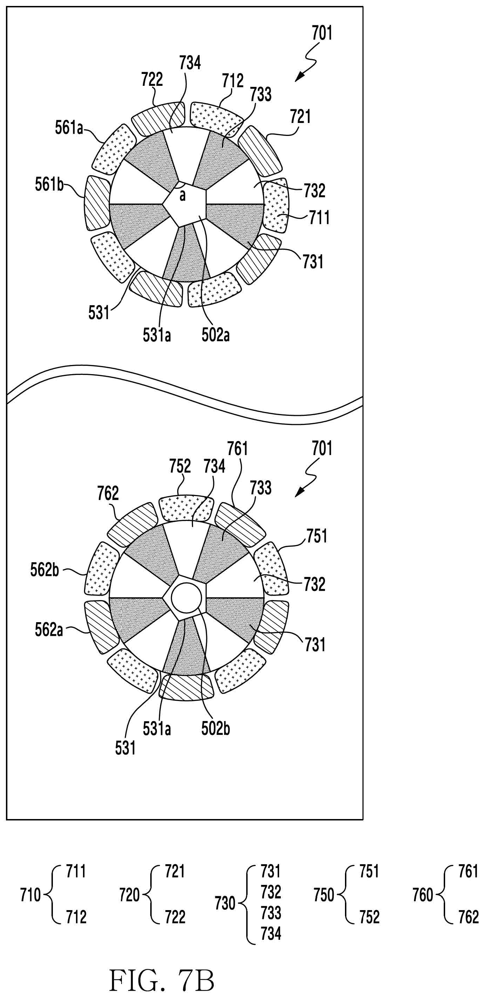

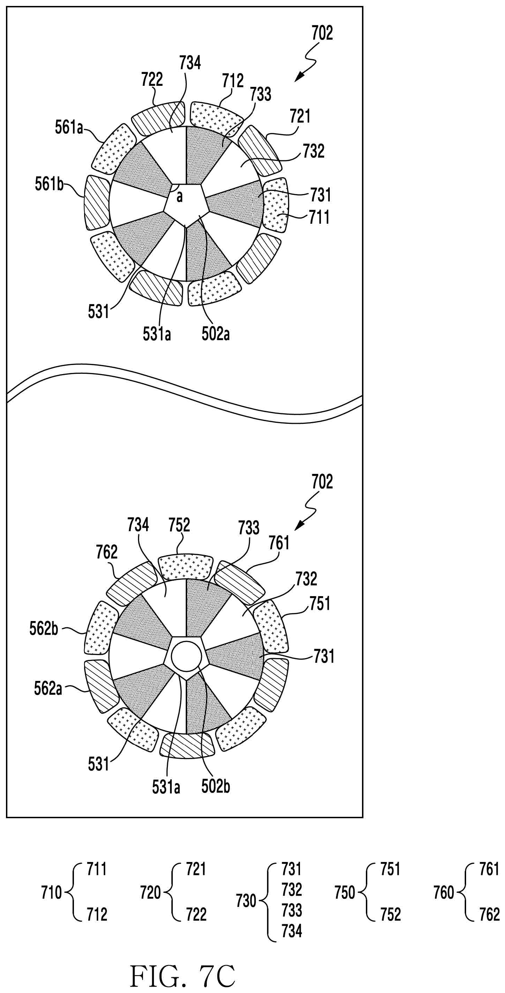

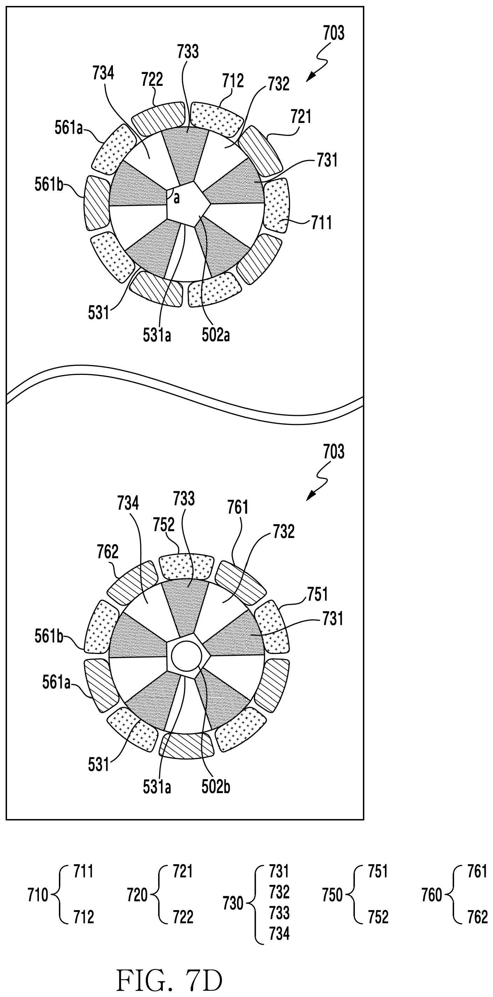

FIG. 7A illustrates a driving unit of an exemplary electronic device. FIGS. 7B, 7C, and 7D are partial cross-sectional views of a driving unit of an exemplary electronic device, which are taken along line B-B' and line C-C' of FIG. 7A.

Referring to FIG. 7A, an electronic device 101 may include a housing 200 that includes a first housing (e.g., the first housing 210 of FIG. 2A) and a second housing 220 movably coupled with the first housing 210. The electronic device 101 may include a motor assembly 361 disposed in the housing 200. The electronic device 101 may include a gear assembly 510 linked with the motor assembly 361 to move the second housing 220 with respect to the first housing 210 according to driving of the motor assembly 361. The motor assembly 361 may include a first shaft (e.g., the first shaft 501 of FIG. 5C) that includes a first end (e.g., the first end 501a of FIG. 6A) coupled with the gear assembly 510 and a second end (e.g., the second end 501b of FIG. 5C) opposite to the first end 501a. The motor assembly 361 may include a second shaft 502 separated from the first shaft 501. The motor assembly 361 may include a plurality of coils (e.g., the plurality of coils 520 of FIG. 5C) that include a first coil (e.g., the first coil 521 of FIG. 5C) disposed along the first shaft 501 and one or more second coils 522 disposed along the second shaft 502. The motor assembly 361 may include a rotating member 530 that is coupled with the second shaft 502 to rotate the second shaft 502 based on current flowing in the one or more second coils 522 and includes a fastening hole (e.g., the fastening hole 532a of FIG. 5C) configured to insert the second end 501b of the first shaft 501. The motor assembly 361 may include a vibrator 540 coupled to the second shaft 502 to provide a haptic feedback 600 based on the rotation of the second shaft 502. The rotating member 530 may provide an unfastened state and a fastened state by moving with respect to the first shaft 501 based on current flowing in the first coil 521. The unfastened state may be a state in which the second end 501b of the first shaft 501 is separated from the fastening hole 532a such that the second shaft 502 is rotatable with respect to the first shaft 501 to provide a haptic feedback (e.g., the haptic feedback 600 of FIG. 6A) through the vibrator 540. The fastened state may be a state in which the second end 501b of the first shaft 501 is inserted into the fastening hole 532a such that the first shaft 501 is rotatable with respect to the second shaft 502 to move the second housing 220 with respect to the first housing 210.

For example, the motor assembly 361 may include a first region 361a at which the first coil 521 is disposed and a second region 361b at which the one or more second coils 522 are disposed. For example, the gear assembly 510 may include a reducer 511, a pinion gear 362, a rack gear 363 engaged with the pinion gear 362, and a third shaft 512 connecting the pinion gear 362 and the reducer 511. For example, the rotating member 530 may include a magnet 531. For example, the one or more second coils 522 may include a second coil 522a and a third coil 522b. For example, the motor assembly 361 may include magnetic members 561 and 562 configured to rotate the magnet 531 by having different magnetic poles from each other based on current flowing in the one or more second coils 522.

According to an embodiment, the magnet 531 may include a plurality of magnetic poles 730. A first set of magnetic members 561 may be disposed between the magnet 531 and the second coil 522a. The first set of magnetic members 561 may have different magnetic poles from each other based on current flowing through the second coil 522a. A second set of magnetic members 562 may be disposed between the magnet 531 and the third coil 522b. The second set of magnetic members 562 may be configured to rotate the rotating member 530 through a magnetic force with the plurality of magnetic poles 730 of the magnet 531 together with the first set of magnetic members 561 by having different magnetic poles from each other based on current flowing through the third coil 522b.

For example, the first set of magnetic members 561 may include a first magnetic member 561a and a second magnetic member 561b paired with each other. The first magnetic member 561a may include first claws 710. The second magnetic member 561b may include second claws 720 engaged with the first claws 710. For example, the second set of magnetic members 562 may include a third magnetic member 562a and a fourth magnetic member 562b paired with each other. The third magnetic member 562a may include third claws 750. The fourth magnetic member 562b may include fourth claws 760 engaged with the third claws 750.

For example, the second coil 522a may be wound around a second inner frame 552b of a second motor housing 552 in the second region 361b. The third coil 522b may be wound around a third inner frame 553b of a third motor housing 553 in the second region 361b. The first set of magnetic members 561 may have different magnetic poles from each other by current flowing in the second coil 522a by being surrounded by the second inner frame 552b around which the second coil 522a is wound. The second set of magnetic members 562 may have different magnetic poles from each other by current flowing in the third coil 522b by being surrounded by the third inner frame 553b around which the third coil 522b is wound.

For example, when referring to FIGS. 7B, 7C, and 7D, each of the plurality of magnetic poles 730 of the magnet 531 may have a designated volume. Each of the plurality of magnetic poles 730 may be disposed to face the magnetic members 561 and 562. For example, the magnet 531 may have a cylindrical shape. Each of the plurality of magnetic poles 730 may be formed such that areas facing the magnetic members 561 and 562 are substantially the same as each other. For example, the first set of magnetic members 561 may be configured substantially the same as or similar to the second set of magnetic members 562. The first set of magnetic members 561 may be attached to the second set of magnetic members 562 so as to deviate from each other at a designated angle. For example, the magnet 531 may include a through hole 531a for accommodating the second shaft 502. The through hole 531a may have, for example, a regular polygonal shape. When the magnetic members 561 and 562 are viewed from above, a deviated angle between a claw 711 of the first claws 710 and a claw 751 of the third claws 750 corresponding to the claw 711 may correspond to half of an inner angle a of the regular polygon. A deviated angle between a claw 721 of the second claws 720 and a claw 761 of the fourth claws 760 corresponding to the claw 721 may correspond to half of the inner angle a. However, the above-described embodiments are examples and are not limited thereto.

For example, when referring to FIGS. 7B and 7C sequentially, a direction of current flowing in the second coil 522a and the third coil 522b may be changed while changing from a state 701 to a state 702. The first claws 710 may be changed from an N pole to an S pole, and the second claws 720 may be changed from an S pole to an N pole. The third claws 750 may be changed from an N pole to an S pole, and the fourth claws 760 may be changed from an S pole to an N pole. Among the plurality of magnetic poles 730 of the magnet 531, a first magnetic pole 731 and a third magnetic pole 733 having the N pole may provide a rotational force to the magnet 531 to face the magnetic poles 711 and 712, respectively, by an attractive force with each of the magnetic poles 711 and 712 having the S pole. Among the plurality of magnetic poles 730, a second magnetic pole 732 and a fourth magnetic pole 734 having the S pole may provide a rotational force to the magnet 531 to face the magnetic poles 721 and 722, respectively, by an attractive force with each of the magnetic poles 721 and 722 having the N pole.

For example, when referring to FIGS. 7C and 7D sequentially, a direction of current flowing in the second coil 522a and the third coil 522b may be changed while changing from the state 702 to a state 703. For example, a direction flowing in the second coil 522a in the state 701 and a direction flowing in the second coil 522a in the state 703 may be the same. A direction flowing in the third coil 522b in the state 701 and a direction flowing in the third coil 522b in the state 703 may be the same. For example, while changing from the state 702 to the state 703, the first claws 710 may be changed from an S pole to an N pole, and the second claws 720 may be changed from an N pole to an S pole. The third claws 750 may be changed from an S pole to an N pole, and the fourth claws 760 may be changed from an N pole to an S pole. Among the plurality of magnetic poles 730 of the magnet 531, the first magnetic pole 731 and the third magnetic pole 733 having the N pole may provide a rotational force to the magnet 531 to face the magnetic poles 751 and 752, respectively, by an attractive force with each of the magnetic poles 751 and 752 having the S pole. Among the plurality of magnetic poles 730, the second magnetic pole 732 and the fourth magnetic pole 734 having the S pole may provide a rotational force to the magnet 531 to face the magnetic poles 761 and 762, respectively, by an attractive force with each of the magnetic poles 761 and 762 having the N pole. However, the above-described embodiments are examples and are not limited thereto.

The motor assembly 361 according to the above-described embodiment may provide a driving force of the motor assembly 361 by including the magnetic members 561 and 562 configured to rotate the rotating member 530 based on a change in a current direction flowing in the one or more second coils 522. The first set of magnetic members 561 may be disposed to provide a rotational force of the rotating member 530 by being attached to the second set of magnetic members 562 to deviate at a designated angle.

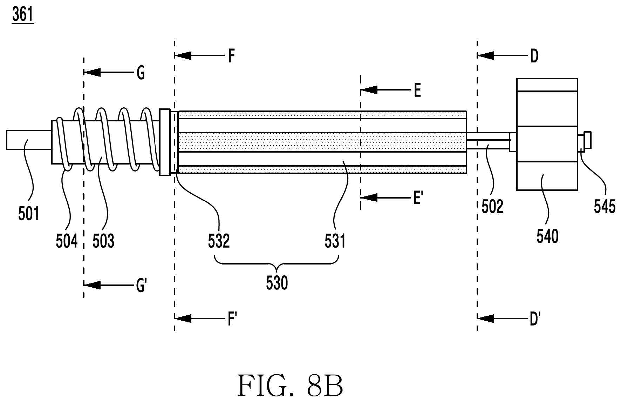

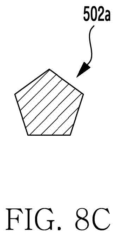

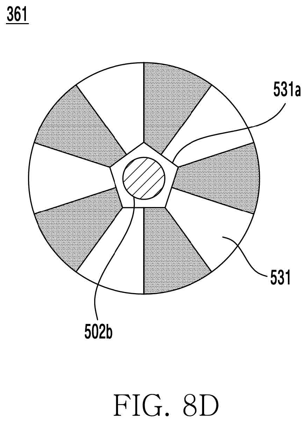

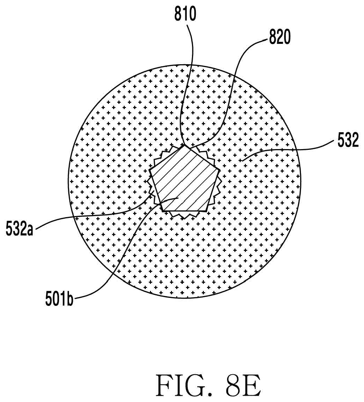

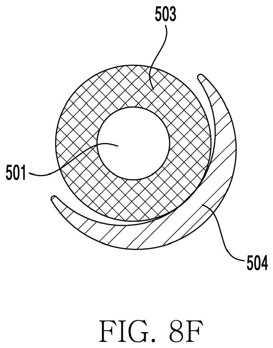

FIG. 8A is a partial exploded view of a motor assembly of an exemplary electronic device. FIG. 8B illustrates a portion of a motor assembly of an exemplary electronic device in a fastened state. FIG. 8C is a partial cross-sectional view of a motor assembly of an exemplary electronic device, which is taken along line D-D' of FIG. 8B. FIG. 8D is a partial cross-sectional view of a motor assembly of an exemplary electronic device, which is taken along line E-E' of FIG. 8B. FIG. 8E is a partial cross-sectional view of a motor assembly of an exemplary electronic device, which is taken along line F-F' of FIG. 8B. FIG. 8F is a partial cross-sectional view of a motor assembly of an exemplary electronic device, which is taken along line G-G' of FIG. 8B.

Referring to FIGS. 8A, 8B, 8C, 8D, 8E, and 8F, an electronic device 101 may include a housing (e.g., the housing 200 of FIG. 2A) that includes a first housing (e.g., the first housing 210 of FIG. 2A) and a second housing (e.g., the second housing 220 of FIG. 2A) movably coupled with the first housing 210. The electronic device 101 may include a motor assembly 361 disposed in the housing 200. The electronic device 101 may include a gear assembly (e.g., the gear assembly 510 of FIG. 5A) linked with the motor assembly 361 to move the second housing 220 with respect to the first housing 210 according to driving of the motor assembly 361. The motor assembly 361 may include a first shaft 501 that includes a first end (e.g., the first end 501a of FIG. 6A) coupled with the gear assembly 510 and a second end 501b opposite to the first end 501a. The motor assembly 361 may include a second shaft 502 separated from the first shaft 501. The motor assembly 361 may include a plurality of coils (e.g., the plurality of coils 520 of FIG. 5C) that include a first coil (e.g., the first coil 521 of FIG. 5C) disposed along the first shaft 501 and one or more second coils 522 disposed along the second shaft 502. The motor assembly 361 may include a rotating member 530 that is coupled with the second shaft 502 to rotate the second shaft 502 based on current flowing in the one or more second coils 522, and includes a fastening hole 532a configured to insert the second end 501b of the first shaft 501. The motor assembly 361 may include a vibrator 540 coupled to the second shaft 502 to provide a haptic feedback 600 based on the rotation of the second shaft 502. The rotating member 530 may provide an unfastened state and a fastened state by moving with respect to the first shaft 501 based on current flowing in the first coil 521. The unfastened state may be a state in which the second end 501b of the first shaft 501 is separated from the fastening hole 532a such that the second shaft 502 is rotatable with respect to the first shaft 501 to provide a haptic feedback (e.g., the haptic feedback 600 of FIG. 6A) through the vibrator 540. The fastened state may be a state in which the second end 501b of the first shaft 501 is inserted into the fastening hole 532a such that the first shaft 501 is rotatable with respect to the second shaft 502 to move the second housing 220 with respect to the first housing 210. According to an embodiment, the motor assembly 361 may include a stopper 503 that at least partially covers the first shaft 501, and an elastic member 504 that pressures the stopper 503 toward the rotating member 530.

According to an embodiment, the rotating member 530 may include a magnet 531 including a plurality of magnetic poles (e.g., the plurality of magnetic poles 730 of FIG. 7A), and a fastening member 532 attached to the magnet 531 toward the second end 501b and forming the fastening hole 532a. The second end 501b may have a regular polygonal shape. The number of the plurality of magnetic poles 730 may correspond to twice the number of corners 810 of the second end 501b. The number of recess portions 820 for accommodating the corners 810 of the second end 501b of the fastening hole 532a may correspond to twice the number of the plurality of magnetic poles 730.

For example, when referring to FIGS. 7B to 7D together with FIGS. 8A and 8E, in order to accommodate the second end 501b while the rotating member 530 rotates in the unfastened state and then it is changed from the unfastened state to the fastened state, the fastening hole 532a may be required to have a shape to accommodate the second end 501b regardless of the rotation of the rotating member 530. For example, as illustrated, the cross section of the second end 501b may have a regular pentagonal shape. As illustrated in FIGS. 7B to 7D, the magnet 531 may be configured to include 10 magnetic poles so as to rotate at an angle corresponding to half of an inner angle a of the regular pentagon in states 701, 702, and 703. Since the fastening hole 532a rotates along the magnet 531, the fastening hole 532a may include 20 recess portions 820 to accommodate the corners 810 of the second end 501b having a regular pentagonal shape. However, the above-described embodiment is an example and is not limited thereto.

When referring to FIGS. 8C and 8D, the magnet 531 may include a through hole 531a for accommodating the second shaft 502. The second shaft 502 may include a first portion 502a configured to be fastened with the through hole 531a in the unfastened state, and a second portion 502b extending from the first portion 502a and guiding movement of the magnet 531 to the first shaft 501. For example, the first portion 502a may have a shape corresponding to the through hole 531a to be fastened to the through hole 531a. For example, the through hole 531a may surround the second portion 502b. The through hole 531a may be slidable or movable with respect to the second portion 502b such that the rotating member 530 is rotatable with respect to the second portion 502b in the fastened state in which it is fastened with the first shaft 501.

Referring to FIG. 8F, the stopper 503 may be penetrated by the first shaft 501. The stopper 503 may be slidably coupled with the first shaft 501. The elastic member 504 may at least partially surround the stopper 503. The elastic member 504 may separate the rotating member 530 from the first shaft 501 by pressuring the stopper 503 toward the rotating member 530 by a restoring force while changing from the fastened state to the unfastened state.

According to the above-described embodiment, the rotating member 530 of the motor assembly 361 may be configured to change the electronic device 101 from the unfastened state to the fastened state by including the fastening hole 532a configured to insert the second end 501b of the first shaft 501 while changing from the unfastened state to the fastened state, regardless of the rotation of the rotating member 530 in the unfastened state.

FIG. 9A illustrates a portion of an exemplary electronic device in a first state. FIG. 9B illustrates a portion of an exemplary electronic device in a second state.

Referring to FIGS. 9A and 9B, an electronic device 101 may include a housing 200 that includes a first housing 210 and a second housing 220 movably coupled with respect to the first housing 210. The electronic device 101 may include a motor assembly 361 disposed in the housing 200. The electronic device 101 may include a gear assembly (e.g., the gear assembly 510 of FIG. 5A) linked with the motor assembly 361 to move the second housing 220 with respect to the first housing 210 according to driving of the motor assembly 361. The motor assembly 361 may be configured to provide a haptic feedback (e.g., the haptic feedback 600 of FIG. 6A) or to move the second housing 220 with respect to the first housing 210 by rotation and/or movement of a rotating member (e.g., the rotating member 530 of FIG. 5C) in the motor assembly. The motor assembly 361 and the gear assembly 510 may be referred to as the motor assembly 361 and the gear assembly 510 illustrated in FIGS. 5A to 6B, respectively.

According to an embodiment, the motor assembly 361 may be fastened within the first housing 210 in the housing 200. A pinion gear 362 of the gear assembly 510 may be fastened to the first housing 210 together with the motor assembly 361. A rack gear 363 engaged with the pinion gear 362 may be fastened to the second housing 220. For example, since the second housing 220 moves in a first direction 261 and a second direction 262 opposite to the first direction 261 with respect to the first housing 210, the first housing 210 may be a portion of the housing 200 that is gripped by a user. The motor assembly 361 may provide an improved haptic feedback 600 to the user by being fastened to the first housing 210 that is relatively gripped by the user, but is not limited thereto. For example, the electronic device 101 may include a display (e.g., the display 230 of FIG. 2A) in which a display region is changed along the second housing 220 moving with respect to the first housing 210. According to a direction of visual objects and/or information displayed through the display 230, the motor assembly 361 may provide an improved haptic feedback 600 to the user by being fastened to a portion of the housing 200 that is easy for the user to grip.

The motor assembly 361 according to the above-described embodiment may provide an improved haptic feedback 600 to the user by being fastened to the first housing 210 that is easily gripped by the user.

FIG. 10 is a block diagram of an exemplary electronic device for driving a motor assembly.

Referring to FIG. 10, an electronic device 101 may include a housing (e.g., the housing 200 of FIG. 2A) that includes a first housing (e.g., the first housing 210 of FIG. 2A) and a second housing (e.g., the second housing 220 of FIG. 2A) movably coupled with the first housing 210. The electronic device 101 may include a motor assembly (e.g., the motor assembly 361 of FIG. 3B) disposed in the housing 200. The electronic device 101 may include a gear assembly (e.g., the gear assembly 510 of FIG. 5A) linked with the motor assembly 361 to move the second housing 220 with respect to the first housing 210 according to driving of the motor assembly 361. The motor assembly 361 may include a first shaft (e.g., the first shaft 501 of FIG. 5C) that includes a first end (e.g., the first end 501a of FIG. 6A) coupled with the gear assembly 510 and a second end (e.g., the second end 501b of FIG. 5C) opposite to the first end 501a. The motor assembly 361 may include a second shaft (e.g., the second shaft 502 of FIG. 5C) separated from the first shaft 501. The motor assembly 361 may include a plurality of coils 520 that include a first coil 521 disposed along the first shaft 501 and one or more second coils 522 disposed along the second shaft 502. The motor assembly 361 may include a rotating member 530 that is coupled with the second shaft 502 to rotate the second shaft 502 based on current flowing in the one or more second coils 522, and includes a fastening hole (e.g., the fastening hole 532a of FIG. 5C) configured to insert the second end 501b of the first shaft 501. The motor assembly 361 may include a vibrator (e.g., the vibrator 540 of FIG. 5C) coupled to the second shaft 502 to provide a haptic feedback 600 based on the rotation of the second shaft 502. The rotating member 530 may provide an unfastened state and a fastened state by moving with respect to the first shaft 501 based on current flowing in the first coil 521. The unfastened state may be a state in which the second end 501b of the first shaft 501 is separated from the fastening hole 532a such that the second shaft 502 is rotatable with respect to the first shaft 501 to provide a haptic feedback (e.g., the haptic feedback 600 of FIG. 6A) through the vibrator 540. The fastened state may be a state in which the second end 501b of the first shaft 501 is inserted into the fastening hole 532a such that the first shaft 501 is rotatable with respect to the second shaft 502 to move the second housing 220 with respect to the first housing 210.

According to an embodiment, the electronic device 101 may include a power management circuit 1010, a converter 1020, and motor assembly driving circuitry 1030. The converter 1020 may be configured to change a voltage required for the motor assembly 361 based on power provided from a battery (e.g., the battery 189 of FIG. 1) by the power management circuit 1010. The motor assembly driving circuitry 1030 may control the motor assembly 361 to drive the motor assembly 361 based on the power supplied by the power management circuit 1010.

According to an embodiment, a processor 120 may control the power management circuit 1010 such that current flows through the one or more second coils 522 of the plurality of coils 520 based on receiving a first user input for the haptic feedback 600. For example, the processor 120 may control the power management circuit 1010 and/or the motor assembly driving circuitry 1030 such that current flows through a second coil 522a and a third coil 522b based on the first user input for the haptic feedback 600. Since current does not flow in the first coil 521, the electronic device 101 may maintain the unfastened state. By controlling the power management circuit 1010 and/or the motor assembly driving circuitry 1030 to periodically change a direction of the current flowing in the second coil 522a and the third coil 522b, the processor 120 may rotate the rotating member 530 including a magnet (e.g., the magnet 531 of FIG. 5C) in the motor assembly 361. The motor assembly 361 may provide the haptic feedback 600 through a second shaft 502 coupled with the rotating member 530 for rotating together with the rotating member 530, and the vibrator 540.

According to an embodiment, the processor 120 may control the power management circuit 1010 such that current flows in the first coil 521 based on receiving a second user input for movement of the second housing 220 with respect to the first housing 210. The processor 120 may control the power management circuit 1010 such that current flows through the one or more second coils 522 while current flows in the first coil 521. For example, the processor 120 may control the power management circuit 1010 and/or the motor assembly driving circuitry 1030 such that current flows in the first coil 521 based on the second user input for the movement of the second housing 220 with respect to the first housing 210. Since the fastening hole 532a of the rotating member 530 is fastened to the second end 501b of the first shaft 501 while current flows in the first coil 521, the electronic device 101 may maintain the fastened state. The processor 120 may control the power management circuit 1010 and/or the motor assembly driving circuitry 1030 such that current flows in the second coil 522a and the third coil 522b while current flows in the first coil 521. The processor 120 may rotate the rotating member 530 including the magnet 531 in the motor assembly 361 by controlling the power management circuit 1010 and/or the motor assembly driving circuitry 1030 to periodically change a direction of the current flowing in the second coil 522a and the third coil 522b. The motor assembly 361 may move the second housing 220 with respect to the first housing 210 through the first shaft 501 fastened to the fastening hole 532a to rotate together with the rotating member 530 in the fastened state, and the gear assembly 510.

The processor 120 according to the above-described embodiment may provide various user experiences to a user by controlling the power management circuit 1010 (and/or the motor assembly driving circuitry 1030) to provide the haptic feedback 600 using the motor assembly 361 or to move the second housing 220 with respect to the first housing 210 through the plurality of coils 520.

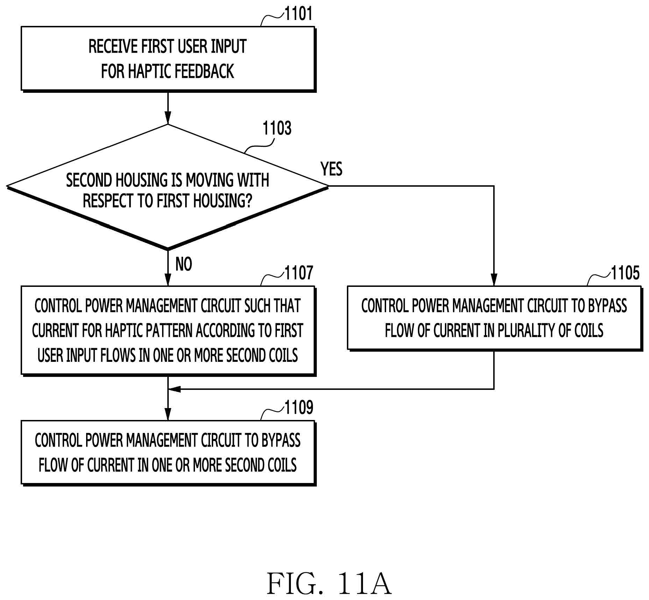

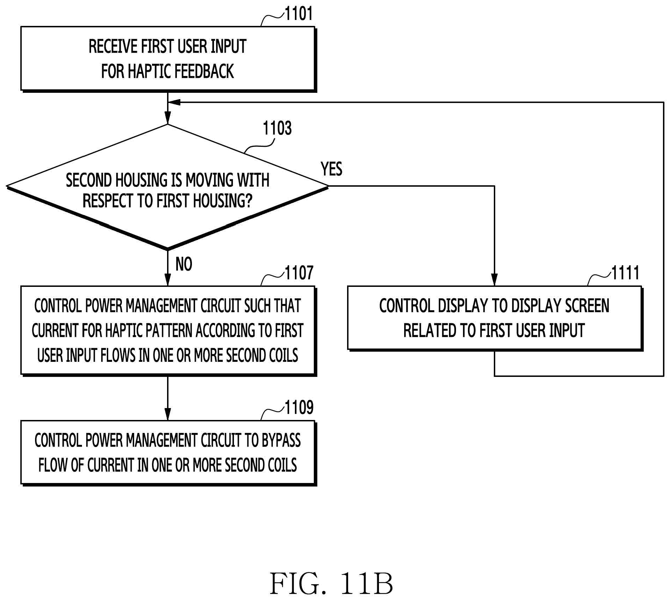

FIGS. 11A and 11B are flowcharts of an exemplary electronic device for driving a motor assembly.

Operations of FIGS. 11A and 11B may be performed by the processor 120 of the electronic device 101 of FIGS. 1 and 10.

Referring to FIGS. 11A and 11B, in operation 1101, the processor 120 may receive a first user input for a haptic feedback (e.g., the haptic feedback 600 of FIG. 6A). For example, the processor 120 may determine a haptic pattern corresponding to the first user input among set haptic patterns (e.g., haptic patterns 601, 602, 603, and 604 of FIG. 6A) based on the first user input.

In operation 1103, the processor 120 may identify whether a second housing (e.g., the second housing 220 of FIG. 2A) is moving with respect to a first housing (e.g., the first housing 210 of FIG. 2A). For example, the processor 120 may identify whether current flows in both a first coil (e.g., the first coil 521 of FIG. 5C) and one or more second coils 522 based on receiving the first user input for a haptic feedback 600. In a case of not identifying the second housing 220 moving with respect to the first housing 210 (e.g., 1103-No), the processor 120 may perform operation 1107.

Referring to FIG. 11A, in operation 1105, the processor 120 may control a power management circuit (e.g., the power management circuit 1010 of FIG. 10) to bypass and/or block a flow of current in a plurality of coils (e.g., the plurality of coils 520 of FIG. 5C) based on identifying that the second housing 220 is moving with respect to the first housing 210. For example, the processor 120 may control the power management circuit 1010 to bypass and/or block the flow of current to the plurality of coils 520 based on identifying the flow of current to the plurality of coils 520. Since current does not flow in a first coil 521, an electronic device 101 may be changed from a fastened state to an unfastened state. Since no current flows in the one or more second coils 522, rotation of a rotating member (e.g., the rotating member 530 of FIG. 5C) may be ceased, and thus the movement of the second housing 220 with respect to the first housing 210 may be ceased.

In the operation 1107, the processor 120 may control the power management circuit 1010 such that current for a haptic pattern according to the first user input flows in one or more second coils. For example, in the operation 1107, the processor 120 may provide a haptic pattern according to the first user input by controlling the power management circuit 1010 such that a direction of the current flowing in the one or more second coils 522 in the unfastened state is changed periodically.

In operation 1109, the processor 120 may control the power management circuit 1010 to bypass and/or block the flow of current in the one or more second coils 522 based on a haptic pattern according to the first user input, provided during a designated time interval. As the flow of current in the one or more second coils 522 is bypassed and/or blocked, the electronic device 101 may terminate providing the haptic pattern.

Referring to FIG. 11B, in operation 1111, the processor 120 may control a display (e.g., the display 230 of FIG. 2A) to display a screen related to the first user input, unlike the operation 1105 of FIG. 11A. For example, the processor 120 may control the display 230 to display a screen related to the first user input and/or the haptic pattern according to the first user input while current flows in the plurality of coils 520.

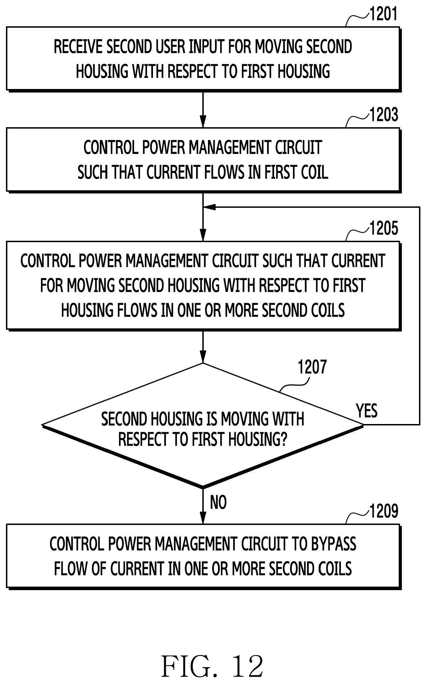

FIG. 12 is a flowchart of an exemplary electronic device for driving a motor assembly.

Operations of FIG. 12 may be performed by the processor 120 of the electronic device 101 of FIGS. 1 and 10.

Referring to FIG. 12, in operation 1201, the processor 120 may receive a second user input for moving a second housing (e.g., the second housing 220 of FIG. 2A) with respect to a first housing (e.g., the first housing 210 of FIG. 2A). For example, the processor 120 may receive a second user input for changing a size of a display region of a display (e.g., the display 230 of FIG. 2A) that is visually exposed to an outside of the electronic device 101.

In operation 1203, the processor 120 may control a power management circuit (e.g., the power management circuit 1010 of FIG. 10) such that current flows in a first coil (e.g., the first coil 521 of FIG. 5C) based on the second user input. As current flows in the first coil 521, a rotating member (e.g., the rotating member 530 of FIG. 5C) in a motor assembly (e.g., the motor assembly 361 of FIG. 3B) may move toward a first shaft (e.g., the first shaft 501 of FIG. 5C). The electronic device 101 may be changed from an unfastened state to a fastened state as the first shaft 501 is fastened to a fastening hole (e.g., the fastening hole 532a of FIG. 5C) of the rotating member 530.

In operation 1205, the processor 120 may control the power management circuit 1010 such that current for moving the second housing 220 with respect to the first housing 210 flows in one or more second coils 522 while current flows in the first coil 521. For example, while the fastened state is maintained through current flowing in the first coil 521, the processor 120 may control the power management circuit 1010 to periodically change a direction of the current flowing in the one or more second coils 522. The rotating member 530 (or a magnet 531 included in the rotating member 530) may be rotated by the current flowing in the one or more second coils 522. The first shaft 501 fastened with the fastening hole 532a of the rotating member 530 may move the second housing 220 with respect to the first housing 210 through a gear assembly (e.g., the gear assembly 510 of FIG. 5A) by rotating together with the rotating member 530.

In operation 1207, the processor 120 may be configured to identify whether the second housing 220 is moving with respect to the first housing 210. While identifying that the second housing 220 moves with respect to the first housing 210 (e.g., 1207-Yes), the processor 120 may control the power management circuit 1010 such that current flows in a plurality of coils 520.

In operation 1209, the processor 120 may control the power management circuit 1010 to bypass and/or block the flow of current in the one or more second coils 522 based on identifying that the movement of the second housing 220 with respect to the first housing 210 has been ceased. For example, the processor 120 may control the power management circuit 1010 to bypass and/or block the flow of current in the one or more second coils 522 based on identifying a display region of the display (e.g., the display 230 of FIG. 2A) exposed to the outside of the electronic device 101, set based on the second user input. For example, the processor 120 may control the power management circuit 1010 to bypass and/or block the flow of current in the one or more second coils 522 based on identifying the display 230 in a first state in which a size of the display region of the display 230 visually exposed to the outside of the electronic device 101 is minimized or in a second state in which the size of the display region is maximized.

An electronic device (e.g., the electronic device 101 of FIG. 1) according to the above-described embodiment may include a housing (e.g., the housing 200 of FIG. 2A) including a first housing part (e.g., the first housing 210 of FIG. 2A) and a second housing part (e.g., the second housing 220 of FIG. 2A) movably coupled with the first housing part. The electronic device may include a motor assembly, disposed in the housing, including a first shaft (e.g., the first shaft 501 of FIG. 5C), a second shaft (e.g., the second shaft 502 of FIG. 5A) separated from the first shaft, a rotating member (e.g., the rotating member 530 of FIG. 5C) configured to be fastened to at least one of the first shaft and the second shaft, and a vibrator (e.g., the vibrator 540 of FIG. 5A) coupled to a side of the second shaft. The electronic device may include a gear assembly (e.g., the gear assembly 510 of FIG. 5A) linked with the first shaft to move the second housing part with respect to the first housing part according to driving of the motor assembly. The electronic device may include at least one processor (e.g., the processor 120 of FIG. 1), and memory (e.g., the memory 130 of FIG. 1), including one or more storage mediums, storing instructions. The instructions, when executed by the at least one processor individually or collectively, may cause the electronic device to control the rotating member to be fastened to the first shaft such that the second housing part is movable with respect to the first housing part through the rotating member. The instructions, when executed by the at least one processor individually or collectively, may cause the electronic device to control the rotating member to be fastened to the second shaft such that the vibrator provides vibration through the rotating member.

For example, the motor assembly may further include a plurality of coils, surrounding the rotating member, including a first coil (e.g., the first coil 521 of FIG. 5C) disposed along the first shaft and one or more second coils (e.g., the one or more second coils 522 of FIG. 5C) disposed along the second shaft. The rotating member may further include a magnet (e.g., the magnet 531 of FIG. 5C) including a through hole accommodating at least a portion of the second shaft, and a fastening member (e.g., the fastening member 532 of FIG. 5C), attached to the magnet toward the first shaft, forming a fastening hole (e.g., the fastening hole 532a of FIG. 5C) which is configured to be fastened with the first shaft. The instructions, when executed by the at least one processor individually or collectively, may cause the electronic device to move the rotating member toward the first shaft such that the fastening hole is fastened with the first shaft through a magnetic force with the fastening member based on current flowing through the first coil. The instructions, when executed by the at least one processor individually or collectively, may cause the electronic device to rotate the rotating member through a magnetic field formed by the magnet based on current flowing through the one or more second coils.

For example, the magnet may include a plurality of magnetic poles (e.g., the plurality of magnetic poles 730 of FIG. 7A). The one or more second coils may include a second coil (e.g., the second coil 522a of FIG. 5C) and a third coil (e.g., the third coil 522b of FIG. 5C) arranged along the magnet. The motor assembly may further include a first set of magnetic members (e.g., the first set of magnetic members 561 of FIG. 5C), disposed between the magnet and the second coil, having different magnetic poles from each other based on current flowing through the second coil. The motor assembly may further include a second set of magnetic members (e.g., the second set of magnetic members 562 of FIG. 5C), disposed between the magnet and the third coil, configured to rotate the rotating member together with the first set of magnetic members through a magnetic force with the plurality of magnetic poles by having different magnetic poles from each other based on current flowing through the third coil.

For example, the second shaft may include a first portion (e.g., the first portion 502a of FIG. 5C) configured to be fastened with the rotating member, and a second portion (e.g., the second portion 502b of FIG. 5C), connecting with the first portion, guiding movement of the rotating member. The rotating member may be configured to provide a haptic feedback (e.g., the haptic feedback 600 of FIG. 6A) through the vibrator by being fastened to the first portion. The rotating member may be configured to be fastened to the first shaft by being separated from the first portion along the second portion.

For example, the motor assembly may further include a plurality of coils, surrounding the rotating member, including a first coil disposed along the first shaft and one or more second coils disposed along the second shaft. The motor assembly may further include a stopper (e.g., the stopper 503 of FIG. 5C), contacting the rotating member, slidably coupled with the first shaft, and an elastic member (e.g., the elastic member 504 of FIG. 5C) pressuring the stopper toward the rotating member. The rotating member may be configured to move in a first direction (e.g., the third direction 263 of FIG. 6A) by pressuring the stopper based on current flowing in the first coil. The rotating member may be configured to move in a second direction (e.g., the fourth direction 264 of FIG. 6A) opposite to the first direction by the elastic member based on the first coil in which the current flow is bypassed.

For example, the gear assembly may include a third shaft (e.g., the third shaft 512 of FIG. 5A) configured to rotate based on rotation of the first shaft, and a reducer (e.g., the reducer 511 of FIG. 5A), connecting with the third shaft, engaged with the first shaft. A rotation velocity of the third shaft in a state in which the rotating member is fastened to the first shaft may be smaller than a rotation velocity of the first shaft in the state in which the rotating member is fastened to the first shaft.

For example, the gear assembly may further include a pinion gear (e.g., the pinion gear 362 of FIG. 3B) coupled with the third shaft to be rotated by the third shaft. The gear assembly may further include a rack gear (e.g., the rack gear 363 of FIG. 3B), engaged with the pinion gear, disposed along a moving direction of the second housing part with respect to the first housing part in the housing to move the second housing part with respect to the first housing part according to rotation of the pinion gear.

For example, the electronic device may include a power management circuit (PMC) (e.g., the power management circuit 1010 of FIG. 10). The motor assembly may include a plurality of coils, surrounding the rotating member, including a first coil disposed along the first shaft and one or more second coils disposed along the second shaft. The instructions, when executed by the at least one processor individually or collectively, may cause the electronic device to, based on receiving a first user input for the haptic feedback, control the PMC to flow current through the one or more second coils among the plurality of coils. The instructions, when executed by the at least one processor individually or collectively, may cause the electronic device to, based on receiving a second user input for movement of the second housing part with respect to the first housing part, control the PMC to flow current through the first coil, and control the PMC to flow current through the one or more second coils while current flowing in the first coil.

For example, the instructions, when executed by the at least one processor individually or collectively, may cause the electronic device to identify whether the second housing part is moving with respect to the first housing part based on the first user input. The instructions, when executed by the at least one processor individually or collectively, may cause the electronic device to control the PMC to bypass a flow of current in the plurality of coils based on identifying the second housing part moving with respect to the first housing part. The instructions, when executed by the at least one processor individually or collectively, may cause the electronic device to control the PMC to flow current through the one or more second coils based on identifying the first coil in which the current flow is bypassed.

For example, the electronic device may further include a display (e.g., the display 230 of FIG. 2A). The instructions, when executed by the at least one processor individually or collectively, may cause the electronic device to identify whether the second housing part is moving with respect to the first housing part based on the first user input. The instructions, when executed by the at least one processor individually or collectively, may cause the electronic device to control the display to display, through the display, a screen related to the first user input based on identifying the second housing part moving with respect to the first housing part.

For example, the motor assembly may further include a plurality of coils, surrounding the rotating member, including a first coil disposed along the first shaft and one or more second coils disposed along the second shaft. The motor assembly may further include a first region (e.g., the first region 361a of FIG. 6A) in which the first coil is disposed, and a second region (e.g., the second region 361b of FIG. 6A) in which the one or more second coils are disposed. The rotating member may be positioned in the second region in a state in which it is fastened with the second shaft. The rotating member may be positioned partially in the first region by sliding in the motor assembly while changing from the state in which it is fastened with the second shaft to a state in which it is fastened with the first shaft.

For example, the rotating member may be slidably coupled with the second shaft in the motor assembly.

For example, the vibrator may include a weight eccentric with respect to the second shaft.

For example, the first shaft and the second shaft may be concentric with each other.

For example, the electronic device may further include a display including a first display region (e.g., the first display region 231 of FIG. 2C) disposed on the second housing part and a second display region (e.g., the second display region 232 of FIG. 2C), extending from the first display region, at least partially slide into the first housing part or visually exposed to an outside of the electronic device according to movement of the second housing part with respect to the first housing part.

An electronic device (e.g., the electronic device 101 of FIG. 1) according to an embodiment may include a housing (e.g., the housing 200 of FIG. 2A) including a first housing part (e.g., the first housing 210 of FIG. 2A) and a second housing part (e.g., the second housing 220 of FIG. 2A) movably coupled with the first housing part. The electronic device may include a motor assembly (e.g., the motor assembly 361 of FIG. 3B) disposed in the housing, and a gear assembly (e.g., the gear assembly 510 of FIG. 5A), linked with the motor assembly to move the second housing part with respect to the first housing part according to driving of the motor assembly. The motor assembly may include a first shaft (e.g., the first shaft 501 of FIG. 5C) including a first end (e.g., the first end 501a of FIG. 6A) coupled with the gear assembly and a second end (e.g., the second end 501b of FIG. 5C) opposite to the first end, and a second shaft (e.g., the second shaft 502 of FIG. 5A) separated from the first shaft. The motor assembly may include a plurality of coils (e.g., the plurality of coils 520 of FIG. 5C) including a first coil (e.g., the first coil 521 of FIG. 5C) disposed along the first shaft and one or more second coils (e.g., the one or more second coils 522 of FIG. 5C) disposed along the second shaft. The motor assembly may include a rotating member (e.g., the rotating member 530 of FIG. 5C), coupled with the second shaft to rotate the second shaft based on current flowing in the one or more second coils, including a fastening hole (e.g., the fastening hole 532a of FIG. 5C) configured to insert the second end of the first shaft. The motor assembly may include a vibrator (e.g., the vibrator 540 of FIG. 5A) coupled to the second shaft to rotate together with the second shaft based on rotation of the second shaft. The rotating member may provide, by moving with respect to the first shaft based on current flowing in the first coil, an unfastened state in which the second end of the first shaft is separated from the fastening hole such that the second shaft is rotatable with respect to the first shaft to rotate the vibrator. The rotating member may provide a fastened state in which the second end of the first shaft is inserted into the fastening hole such that the first shaft is rotatable with respect to the second shaft to move the second housing part with respect to the first housing part based on current flowing in the first coil.

For example, the rotating member may further include a magnet (e.g., the magnet 531 of FIG. 5C) including a through hole accommodating at least a portion of the second shaft, and a fastening member (e.g., the fastening member 532 of FIG. 5C), attached to the magnet toward the second end of the first shaft, forming the fastening hole. The first coil may be configured to move the rotating member through a magnetic force with the fastening member based on current flowing through the first coil. The one or more second coils may be configured to rotate the rotating member through a magnetic field formed by the magnet based on current flowing through the one or more second coils.

For example, the magnet may include a plurality of magnetic poles (e.g., the plurality of magnetic poles 730 of FIG. 7A). The one or more second coils may include a second coil (e.g., the second coil 522a of FIG. 5C) and a third coil (e.g., the third coil 522b of FIG. 5C) arranged along the magnet. The motor assembly may further include a first set of magnetic members (e.g., the first set of magnetic members 561 of FIG. 5C), disposed between the magnet and the second coil, having different magnetic poles from each other based on current flowing through the second coil. The motor assembly may further include a second set of magnetic members (e.g., the second set of magnetic members 562 of FIG. 5C), disposed between the magnet and the third coil, configured to rotate the rotating member together with the first set of magnetic members through a magnetic force with the plurality of magnetic poles by having different magnetic poles from each other based on current flowing through the third coil.

For example, the second shaft 502 may include a first portion (e.g., the first portion 502a of FIG. 5C) configured to be fastened with the rotating member, and a second portion (e.g., the second portion 502b of FIG. 5C), connecting with the first portion, guiding movement of the rotating member 530. The rotating member may be configured to provide a haptic feedback (e.g., the haptic feedback 600 of FIG. 6A) through the vibrator by being fastened to the first portion in the unfastened state. The rotating member may be configured to be fastened to the second end of the first shaft by being separated from the first portion in the fastened state.

For example, the second end of the first shaft may have a regular polygonal shape. The number of the plurality of magnetic poles may correspond to twice the number of corners of the second end. The number of recess portions for accommodating the corners of the second end of the fastening hole may correspond to twice the number of the plurality of magnetic poles.

For example, the motor assembly may further include a stopper (e.g., the stopper 503 of FIG. 5C), contacting the rotating member, coupled with the first shaft, and an elastic member (e.g., the elastic member 504 of FIG. 5C) pressuring the stopper. The rotating member may be configured to, while changing from the unfastened state to the fastened state, move in a first direction (e.g., the third direction 263 of FIG. 6A) by pressuring the stopper based on current flowing in the first coil. The rotating member may be configured to, while changing from the fastened state to the unfastened state, move in a second direction (e.g., the fourth direction 264 of FIG. 6A) opposite to the first direction by the elastic member based on the first coil in which the current flow is bypassed.

For example, the gear assembly may include a third shaft (e.g., the third shaft 512 of FIG. 5A) configured to rotate based on rotation of the first shaft, and a reducer (e.g., the reducer 511 of FIG. 5A), connecting with the third shaft 512, engaged with the first end of the first shaft. A rotation velocity of the third shaft in the fastened state may be smaller than a rotation velocity of the first shaft in the fastened state.

For example, the gear assembly may further include a pinion gear (e.g., the pinion gear 362 of FIG. 3B) coupled with the third shaft to be rotated by the third shaft, and a rack gear (e.g., the rack gear 363 of FIG. 3B) configured to move the second housing with respect to the first housing part according to rotation of the pinion gear by being engaged with the pinion gear and disposed along a moving direction of the second housing part with respect to the first housing part in the housing.

For example, the electronic device may include a power management circuit (PMC) (e.g., the power management circuit 1010 of FIG. 10), at least one processor (e.g., the processor 120 of FIG. 1) including processing circuitry, and memory (e.g., the memory 130 of FIG. 1) including one or more storage mediums, storing instructions. The instructions, when executed by the at least one processor individually or collectively, may cause the electronic device to, based on receiving a first user input for the haptic feedback, control the PMC to flow current through the one or more second coils among the first coil and the one or more second coils. The instructions, when executed by the at least one processor individually or collectively, may cause the electronic device to, based on receiving a second user input for movement of the second housing part with respect to the first housing part, control the PMC to flow current through the first coil. The instructions, when executed by the at least one processor individually or collectively, may cause the electronic device to, based on receiving a second user input for movement of the second housing part with respect to the first housing part, control the PMC to flow current through the one or more second coils while current flowing in the first coil.

For example, the instructions, when executed by the at least one processor individually or collectively, may cause the electronic device to identify whether the second housing is moving with respect to the first housing part based on the first user input. The instructions, when executed by the at least one processor individually or collectively, may cause the electronic device to control the PMC to bypass a flow of current in the plurality of coils based on identifying the second housing part moving with respect to the first housing part. The instructions, when executed by the at least one processor individually or collectively, may cause the electronic device to control the PMC to flow current through the one or more second coils based on identifying the first coil in which the current flow is bypassed.

For example, the electronic device may further include a display (e.g., the display 230 of FIG. 2A). The instructions, when executed by the at least one processor individually or collectively, may cause the electronic device to identify whether the second housing part is moving with respect to the first housing part based on the first user input. The instructions, when executed by the at least one processor individually or collectively, may cause the electronic device to control the display to display, through the display, a screen related to the first user input based on identifying the second housing moving with respect to the first housing part.

For example, the motor assembly may further include a first region (e.g., the first region 361a of FIG. 6A) in which the first coil is disposed, and a second region (e.g., the second region 361b of FIG. 6A) in which the one or more second coils are disposed. The rotating member may be positioned in the second region in the unfastened state. The rotating member may be positioned partially in the first region by sliding in the motor assembly while changing from the unfastened state to the fastened state.

For example, the rotating member may be slidably coupled with the second shaft in the motor assembly.

For example, the vibrator may include a weight eccentric with respect to the second shaft.

For example, the first shaft and the second shaft may be concentric with each other.

For example, the electronic device may further include a display including a first display region (e.g., the first display region 231 of FIG. 2C) disposed on the second housing part and a second display region (e.g., the second display region 232 of FIG. 2C), extending from the first display region, at least partially slide into the first housing part or visually exposed to an outside of the electronic device according to movement of the second housing part with respect to the first housing part.

An electronic device according to an embodiment may include a housing including a first housing part and a second housing part movably coupled with the first housing part. The electronic device may include a motor assembly disposed in the housing, and a gear assembly, linked with the motor assembly to move the second housing part with respect to the first housing part according to driving of the motor assembly, and including a reducer. The motor assembly may include a first shaft including a first end coupled with the reducer and a second end opposite to the first end, and a second shaft separated from the first shaft. The motor assembly may include a rotating member including a magnet including a through hole accommodating the second shaft to rotate the second shaft based on power supplied to the motor assembly, and a fastening member, attached to the magnet, including a fastening hole configured to insert the second end of the first shaft. The motor assembly may include a vibrator, eccentric with respect to the second shaft, coupled to the second shaft to provide a haptic feedback based on rotation of the second shaft. The rotating member may provide, by moving with respect to the first shaft, an unfastened state in which the second end of the first shaft is separated from the fastening hole such that the second shaft is rotatable with respect to the first shaft, for providing the haptic feedback through the vibrator. The rotating member may provide a fastened state in which the second end of the first shaft is inserted into the fastening hole such that the first shaft is rotatable with respect to the second shaft, for moving the second housing part with respect to the first housing part.

For example, the motor assembly may include a plurality of coils including a first coil disposed along the first shaft and one or more second coils at least partially surrounding the rotating member. The first coil may be configured to move the rotating member through a magnetic force with the fastening member based on current flowing through the first coil. The one or more second coils may be configured to rotate the rotating member through a magnetic field formed by the magnet based on current flowing through the one or more second coils.

For example, the motor assembly may further include a stopper, contacting the rotating member, coupled with the first shaft, and an elastic member pressuring the stopper. The rotating member may be configured to, while changing from the unfastened state to the fastened state, move in a first direction by pressuring the stopper based on current flowing in the first coil. The rotating member may be configured to, while changing from the fastened state to the unfastened state, move in a second direction opposite to the first direction by the elastic member based on the first coil in which the current flow is bypassed.

For example, the motor assembly may further include a stopper, contacting the rotating member, coupled with the first shaft, and an elastic member pressuring the stopper. The rotating member may be configured to, while changing from the unfastened state to the fastened state, move in a first direction by pressuring the stopper. The rotating member may be configured to, while changing from the fastened state to the unfastened state, move in a second direction opposite to the first direction by the elastic member.

For example, the first shaft and the second shaft may be concentric with each other.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (200) including a first housing part (210) and a second housing part (220) movably coupled with the first housing part (210);
a motor assembly (361), disposed in the housing (200), including a first shaft (501), a second shaft (502) separated from the first shaft (501), a rotating member (530) configured to be fastened to at least one of the first shaft (501) and the second shaft (502), and a vibrator (540) coupled to a side of the second shaft (502);
a gear assembly (510) linked with the first shaft (501) to move the second housing part (220) with respect to the first housing part (210) according to driving of the motor assembly (361);
at least one processor (120); and
memory (130), comprising one or more storage mediums, storing instructions that, when executed by the at least one processor (120) individually or collectively, cause the electronic device (101) to:
control the rotating member (530) to be fastened to the first shaft (501) such that the second housing part (220) is movable with respect to the first housing part (210) through the rotating member (530); and
control the rotating member (530) to be fastened to the second shaft (502) such that the vibrator (540) provides vibration through the rotating member (530).

2. The electronic device (101) of claim 1,
wherein the motor assembly (361) further includes a plurality of coils (520), surrounding the rotating member (530), including a first coil (521) disposed along the first shaft (501) and one or more second coils (522) disposed along the second shaft (502),
wherein the rotating member (530) further includes:
a magnet (531) including a through hole (531a) accommodating at least a portion of the second shaft (502); and
a fastening member, attached to the magnet (531) toward the first shaft (501), forming a fastening hole (532a) which is configured to be fastened with the first shaft (501), and
wherein the instructions, when executed by the at least one processor (120) individually or collectively, cause the electronic device (101) to:
move the rotating member (530) toward the first shaft (501) such that the fastening hole (532a) is fastened with the first shaft (501) through a magnetic force with the fastening member (532) based on current flowing through the first coil (521); and
rotate the rotating member (530) through a magnetic field formed by the magnet (531) based on current flowing through the one or more second coils (522).

3. The electronic device (101) of claim 2,
wherein the magnet (531) includes a plurality of magnetic poles (730),
wherein the one or more second coils (522) include a second coil (522a) and a third coil (522b) arranged along the magnet (531), and
wherein the motor assembly (361) further includes:
a first set of magnetic members (561), disposed between the magnet (531) and the second coil (522a), having different magnetic poles from each other based on current flowing through the second coil (522a); and
a second set of magnetic members (562), disposed between the magnet (531) and the third coil (522b), configured to rotate the rotating member (530) together with the first set of magnetic members (561) through a magnetic force with the plurality of magnetic poles by having different magnetic poles from each other based on current flowing through the third coil (522b).

4. The electronic device (101) of any one of claims 1 to 3,
wherein the second shaft (502) includes:
a first portion (502a) configured to be fastened with the rotating member (530); and
a second portion (502b), connecting with the first portion (502a), guiding movement of the rotating member (530), and
wherein the rotating member (530) is configured to:
provide a haptic feedback (600) through the vibrator (540) by being fastened to the first portion (502a); and
be fastened to the first shaft (501) by being separated from the first portion (502a) along the second portion (502b).

5. The electronic device (101) of any one of claims 1 to 4,
wherein the motor assembly (361) further includes:
a plurality of coils (520), surrounding the rotating member (530), including a first coil (521) disposed along the first shaft (501) and one or more second coils (522) disposed along the second shaft (502);
a stopper (503), contacting the rotating member (530), slidably coupled with the first shaft (501); and
an elastic member (504) pressuring the stopper (503) toward the rotating member (530),
and
wherein the rotating member (530) is configured to:
move in a first direction (263) by pressuring the stopper (503) based on current flowing through the first coil (521); and
move in a second direction (264) opposite to the first direction (263) by the elastic member (504) based on the first coil (521) in which the current flow is bypassed.

6. The electronic device (101) of any one of claims 1 to 5,
wherein the gear assembly (510) includes:
a third shaft (512) configured to rotate based on rotation of the first shaft (501); and
a reducer (511), connecting with the third shaft (512), engaged with the first shaft (501),
and
wherein a rotation velocity of the third shaft (512) in a state in which the rotating member (530) is fastened to the first shaft (501) is smaller than a rotation velocity of the first shaft (501) in the state in which the rotating member (530) is fastened to the first shaft (501).

7. The electronic device (101) of claim 6,
wherein the gear assembly (510) further includes:
a pinion gear (362) coupled with the third shaft (512) to be rotated by the third shaft (512); and
a rack gear (363), engaged with the pinion gear (362), disposed along a moving direction of the second housing part (220) with respect to the first housing part (210) in the housing (200) to move the second housing part (220) with respect to the first housing part (210) according to rotation of the pinion gear (362).

8. The electronic device (101) of any one of claims 1 to 7, further comprising:
a power management circuit (PMC) (1010),
wherein the motor assembly (361) further includes a plurality of coils (520), surrounding the rotating member (530), including a first coil (521) disposed along the first shaft (501) and one or more second coils (522) disposed along the second shaft (502), and
wherein the instructions, when executed by the at least one processor (120) individually or collectively, cause the electronic device (101) to:
based on receiving a first user input for the haptic feedback (600), control the PMC (1010) to flow current through the one or more second coils (522) among the plurality of coils (520);
based on receiving a second user input for movement of the second housing part (220) with respect to the first housing part (210):
control the PMC (1010) to flow current through the first coil (521); and
control the PMC (1010) to flow current through the one or more second coils (522) while current flowing through the first coil (521).

9. The electronic device (101) of claim 8,
wherein the instructions, when executed by the at least one processor (120) individually or collectively, cause the electronic device (101) to:
identify whether the second housing part (220) is moving with respect to the first housing part (210) based on the first user input;
control the PMC (1010) to bypass a flow of current through the plurality of coils (520) based on identifying the second housing part (220) moving with respect to the first housing part (210); and
control the PMC (1010) to flow current through the one or more second coils (522) based on identifying the first coil (521) in which the current flow is bypassed.

10. The electronic device (101) of claim 8, further comprising:
a display (230),
wherein the instructions, when executed by the at least one processor (120) individually or collectively, cause the electronic device (101) to:
identify whether the second housing part (220) is moving with respect to the first housing part (210) based on the first user input; and
control the display (230) to display, through the display (230), a screen related to the first user input based on identifying the second housing part (220) moving with respect to the first housing part (210).

11. The electronic device (101) of any one of claims 1 to 10,
wherein the motor assembly (361) further includes:
a plurality of coils (520), surrounding the rotating member (530), including a first coil (521) disposed along the first shaft (501) and one or more second coils (522) disposed along the second shaft (502);
a first region (361a) in which the first coil (521) is disposed;
a second region (361b) in which the one or more second coils (522) are disposed, and
wherein the rotating member (530) is positioned:
in the second region (361b) in a state in which the rotating member (530) is fastened with the second shaft (502); and
partially in the first region (361a) by sliding in the motor assembly (361) while changing from the state in which the rotating member (530) is fastened with the second shaft (502) to a state in which the rotating member (530) is fastened with the first shaft (501).

12. The electronic device (101) of any one of claims 1 to 11,
wherein the rotating member (530) is slidably coupled with the second shaft (502) in the motor assembly (361).

13. The electronic device (101) of any one of claims 1 to 12,
wherein the vibrator (540) includes a weight eccentric with respect to the second shaft (502).

14. The electronic device (101) of any one of claims 1 to 13,
wherein the first shaft (501) and the second shaft (502) are concentric with each other.

15. The electronic device (101) of any one of claims 1 to 14, further comprising:
the display (230) including a first display region (231) disposed on the second housing part (220) and a second display region (232), extending from the first display region (231), at least partially slide into the first housing part (210) or visually exposed to an outside of the electronic device (101) according to movement of the second housing part (220) with respect to the first housing part (210).
